# EUROPÄISCHE PATENTSCHRIFT

(11) **EP 3 976 503 B1**
(45) Veröffentlichungstag und Bekanntmachung des Hinweises auf die Patenterteilung: **08.11.2023**
(21) Anmeldenummer: 20739234.1
(22) Anmeldetag: 26.05.2020
(51) Int. Cl.: B65G 1/02, A47B 47/02, A47B 96/14

(54) **REGALLAGERSYSTEM UND REGALRAHMENTEIL FÜR EIN REGALLAGERSYSTEM**
RACK STORAGE SYSTEM AND RACK FRAME PART FOR A RACK STORAGE SYSTEM
SYSTÈME DE STOCKAGE À RAYONNAGE ET PARTIE DE CADRE DE RAYONNAGE POUR UN SYSTÈME DE STOCKAGE À RAYONNAGE

(30) Priorität: 27.05.2019 AT 5008719 U
(43) Veröffentlichungstag der Anmeldung: 06.04.2022
(73) Patentinhaber: TGW Mechanics GmbH, 4600 Wels (AT)
(72) Erfinder: HADZIC, Mirzet, 4600 Wels (AT)
(74) Vertreter: Burger, Hannes
(86) Internationale Anmeldenummer: PCT/AT2020/060211
(87) Internationale Veröffentlichungsnummer: WO 2020/237271

(56) Entgegenhaltungen:
- EP-A1- 1 406 021
- DE-U- 7 403 717
- DE-U1-202019 102 977
- JP-U- H0 532 513
- US-A- 5 459 967
- US-A1- 2012 185 080
- US-A1- 2018 237 183

## Beschreibung

Die Erfindung betrifft ein Regallagersystem und einen Regalrahmenteil gemäß dem Oberbegriff der Ansprüche 1 und 15.

Aus dem Stand der Technik sind Regallagersysteme bekannt, welche Lagerregale mit Lagerplätzen in übereinander liegenden Lagerebenen, Regalgassen in einer x-Richtung zwischen den Lagerregalen und automatisierte Regalbediengeräte zum Transport von Ladegütern umfassen. Die Lagerregale werden auf einer Bodenplatte aufgestellt und verankert. Auf den Lagerplätzen werden Ladegüter abgestellt. Ladegüter sind Waren, welche in Behältern oder Kartons oder auf Paletten gelagert sind. Die Gebäudewände umfassen Wandelemente, die über eine Tragkonstruktion an den Lagerregalen montiert sind. Die (Wand)Tragkonstruktion umfasst durch Abstandhalter an den Lagerregalen befestigte Tragprofile, wobei die Wandelemente an den Tragprofilen montiert sind. Jedes Tragprofil ist in voneinander getrennt vorgesehenen Montagebereichen jeweils durch einen Abstandhalter und in einem festen Horizontalabstand am Lagerregal befestigt. Üblicherweise handelt es sich bei der (Wand)Tragkonstruktion um eine Schweißkonstruktion, welche über Schrauben an den Lagerregalen montiert wird. Ebenso wird das Gebäudedach über eine (Dach)Tragkonstruktion an den Lagerregalen montiert. Dem Fachmann sind solche Regallagersysteme unter dem Begriff "Silobauweise" bekannt. Diese Bauweise bringt in der Errichtungsphase einige Vorteile mit sich. So erübrigt sich eine separate Gebäudehalle und die kompakte Bauweise ermöglicht eine sehr effiziente Nutzung der vorhandenen Fläche.

Demgegenüber weisen diese bekannten Regallagersysteme in "Silobauweise" aber auch erhebliche Nachteile auf. So ist eine Schweißkonstruktion nicht nur mit einem hohen Aufwand zu fertigen, sondern weist auch ein hohes Eigengewicht auf. Dies verlangt eine steifere Konstruktion der Lagerregale. Damit verbunden sind höhere Anschaffungskosten.

Problematisch sind auch bauliche Abweichungen, welche eine Anpassung an die vorliegende Gegebenheit auf der Baustelle vor Ort erfordern. So kann eine Maßabweichung der Bodenplatte dazu führen, dass nach dem Aufstellen der Lagerregale und der Montage der Tragkonstruktion der Plattenrand und die Gebäudewand nicht mehr innerhalb eines Toleranzbereiches parallel verlaufen. Um dennoch eine normgerechte Ausführung (beispielweise die Abdichtung zwischen Gebäudewand und Bodenplatte) zu schaffen, sind zusätzliche Baumaßnahme erforderlich, die zeitaufwändig und kostspielig sind.

Aus der US 2017/0138059 A1 ist ein Regallagersystem bekannt, umfassend Lagerregale mit Lagerplätzen für Ladegüter, die in übereinander liegenden Lagerebenen nebeneinander angeordnet sind, eine Regalgasse in einer x-Richtung zwischen den Lagerregalen und ein automatisiert betriebenes Regalbediengerät zum Transport von Ladegütern. Die Gebäudewände sind unmittelbar an den Lagerregalen montiert.

Die JP H05-32513 U offenbart die Merkmale des Oberbegriffs der Ansprüche 1 und 15. Das Regallagersystem umfasst äußere Lagerregale und Gebäudewände, welche über jeweils eine Tragkonstruktion an den äußeren Lagerregalen montiert sind. Hierbei sind Tragprofile durch parallel angeordnete Abstandhalter am äußeren Lagerregal angeordnet.

Aus der US 5,459,967 A ist ein Regallagersystem bekannt, wobei Gebäudewände an einem Lagerregal befestigt sind. Hierfür sind Tragprofile jeweils durch einen einzigen horizontal angeordneten Abstandhalter am Lagerregal befestigt.

Eine Aufgabe der Erfindung ist es, ein verbessertes Regallagersystem in "Silobauweise" anzugeben. Insbesondere soll im Zuge der Montagearbeiten ein Ausgleich von bauseitig bedingten Toleranzen ermöglicht werden.

Die Aufgabe der Erfindung wird durch die Merkmale des Anspruches 1 gelöst.

Durch die Einstellvorrichtung je Abstandhalter kann zumindest ein Horizontalabstand zwischen dem Tragprofil und dem äußeren Lagerregal eingestellt werden. Nach einer bevorzugten Ausführung kann der Horizontalabstand im Wesentlichen stufenlos eingestellt werden. Einerseits kann im ersten Montagebereich der erste Abstandhalter und das Tragprofil derart relativ zueinander positioniert werden, dass ein vorgegebener erster Abstand zwischen dem Tragprofil und dem äußeren Lageregal eingehalten wird. Andererseits kann im zweiten Montagebereich der zweite Abstandhalter und das Tragprofil derart relativ zueinander positioniert werden, dass ein vorgegebener zweiter Abstand zwischen dem Tragprofil und dem äußeren Lageregal eingehalten wird. Beispielweise wird der erste Abstand und zweite Abstand nicht auf ein theoretisches Maß nach Bauplan, sondern auf ein tatsächliches Naturmaß eingestellt.

Somit können (ungeplante) bauliche Abweichungen i) ohne zusätzliche Anpassungsarbeiten (beispielweise Ablängen der Abstandhalter, Anschweißen von Bauteilen an den Abstandhaltern oder Tragprofilen, und dgl.) an der (Wand)Tragkonstruktion oder an der Bodenplatte (beispielweise Vergrößerung der Bodenplatte) oder ii) ohne das Vorsehen von Zusatzmaßnahmen (beispielsweise das Anbringen von zusätzlichen Abdichtungen zwischen Wandelementen und Bodenplatte) ausgeglichen werden. Es ist lediglich während der Montagearbeiten darauf zu achten, wie die Gegebenheiten auf der Baustelle sind.

Die Abstandhalter und Tragprofile für die (Wand)Tragkonstruktion können auf ein normiertes Endmaß im Werk vorgefertigt werden, eine Nachbearbeitung auf der Baustelle kann entfallen. Dadurch kann die (Wand)Tragkonstruktion ohne Nacharbeit bei stark reduzierter Arbeitszeit montiert werden. Auch kann die Montage mit einfachem Werkzeug und durch weniger qualifiziertes Personen erfolgen.

Zudem erweist es sich von Vorteil, dass das Flächenausmaß der Bodenplatte optimiert werden kann. Die Bodenplatte braucht gegenüber der für die Lagerregale und Regalgasse(n) benötigten Grundfläche im Flächenausmaß nur geringfügig größer dimensioniert werden, da durch die Einstellbarkeit des Horizontalabstandes auch der Verlauf der (Wand)Tragkonstruktion, insbesondere der Abstand der Tragprofile relativ zu den äußeren Lagerregalen, an Abweichungen von der Parallelität oder Geradheit der Plattenränder angepasst werden kann.

Es ist nunmehr auch möglich, die äußeren Lagerregale gegenüber den Plattenrändern bis auf den Mindestabstand zu setzen und dort beispielweise mit Schrauben zu verankern. Der Mindestabstand ist dabei jener Abstand zum Plattenrand, welcher einzuhalten ist, um sicherzustellen, dass die Bodenplatte im Randbereich durch das Anbringen der Bohrungen nicht ausbricht.

Insgesamt können auch die Montagezeiten für die Regalkonstruktion und das Fassadensystem (Gebäudewände) deutlich reduziert werden, sodass eine frühere Anlagennutzung möglich ist.

Insbesondere können die Durchgangslöcher der Reihe in einem beliebigen Rasterabstand vorgesehen werden, was die Flexibilität in der Wahl von Montagepositionen erhöht. Insbesondere sind die Durchgangslöcher einer Reihe auf einer Grundlinie und in regelmäßigen Abständen vorgesehen. Soll eine hohe Variabilität an Montagepositionen gegeben sein, so muss bloß der Rasterabstand kleiner gewählt werden.

Die Montagesockel sind am äußeren Lagerregal, insbesondere jeweils an Regalrahmenteilen der Lagerregale, übereinander an vordefinierten Montagebereichen befestigt und definieren damit die Höhenpositionen der Abstandhalter.

Erfindungsgemäß sind je Montagebereich ein erster Abstandhalter und zweiter Abstandhalter vorgesehen.

Durch Wahl eines der ersten Durchgangslöcher, an welchem der erste Abstandhalter befestigt wird, und Wahl eines der zweiten Durchgangslöcher, an welchem der zweite Abstandhalter befestigt wird, in einem ersten Montagebereich sowie durch Wahl eines der ersten Durchgangslöcher, an welchem der erste Abstandhalter befestigt wird, und Wahl eines der zweiten Durchgangslöcher, an welchem der zweite Abstandhalter befestigt wird, in einem zweiten Montagebereich kann der Horizontalabstand zwischen einem Tragprofil und dem äußeren Lagerregal und/oder der Vertikalabstand zwischen einem Tragprofil und der Bodenplatte eingestellt werden. Hierzu werden einerseits im ersten Montagebereich der erste Abstandhalter, zweite Abstandhalter und das Tragprofil relativ zueinander positioniert und andererseits im zweiten Montagebereich der erste Abstandhalter, zweite Abstandhalter und das Tragprofil relativ zueinander positioniert.

Bevorzugt sind der erste Abstandhalter und zweite Abstandhalter je Montagebereich mit dem zweiten Anschlussende schwenkbar an dem betreffenden Montagesockel gelagert, um während der Montage eine Schwenkbewegung der ersten und zweiten Abstandhalter relativ zu dem betreffenden Montagesockel zu ermöglichen. Sind der Horizontalabstand und Vertikalabstand eingestellt, wird durch die ersten Fixiermittel je Abstandhalter der eingestellte Horizontalabstand und eingestellte Vertikalabstand fixiert.

Insbesondere kann der Horizontalabstand und/oder Vertikalabstand im Wesentlichen stufenlos eingestellt werden. In diesem Zusammenhang bedeutet "im Wesentlichen stufenlos", wenn das Tragprofil relativ zum äußeren Lageregal in Abstandsschritten von weniger als 10 mm horizontal bewegt werden kann. Mit zunehmender Verkleinerung des Rasterabstandes ist eine "feinere" Einstellung des Horizontalabstands möglich.

Erfindungsgemäß sind der erste Abstandhalter und zweite Abstandhalter vom gemeinsamen Montagesockel aus divergierend angeordnet, sodass die auf die Gebäudewand einwirkende Windlast (Flächenlast - welche senkrecht zur Angriffsfläche wirkt und sich aus Druck- und Sogwirkungen zusammensetzt) gleichmäßig auf die (Wand)Tragkonstruktion und Regalkonstruktion eingeleitet werden können. Die (Wand)Tragkonstruktion und Regalkonstruktion können in vorteilhafter Weise dünnwandig ausgestaltet werden.

Gemäß einer vorteilhaften Ausgestaltung kann es vorgesehen werden, dass durch die Einstellvorrichtung je Abstandhalter zusätzlich zum Horizontalabstand auch ein Vertikalabstand zwischen einem Tragprofil und der Bodenplatte einstellbar ist, und je Abstandhalter das Fixiermittel vorgesehen ist, mittels welchem der eingestellte Horizontalabstand und der eingestellte Vertikalabstand fixierbar sind.

Somit haben auch (ungeplante) Niveauabweichungen oder Unebenheiten an der Bodenplatte keine negativen Auswirkungen auf die Montage der (Wand)Tragkonstruktion. Zusätzliche Anpassungsarbeiten i) an der (Wand)Tragkonstruktion (beispielweise Ablängen der Tragprofile, Anschweißen von Bauteilen an den Tragprofilen, und dgl.) oder an der Bodenplatte (beispielweise Ausnivellieren der Bodenfläche) oder ii) das Vorsehen von Zusatzmaßnahmen (beispielsweise das Anbringen von zusätzlichen Abdichtungen zwischen Wandelementen und Bodenplatte) sind nicht erforderlich. Es ist lediglich während der Montagearbeiten darauf zu achten, wie die Gegebenheit auf der Baustelle sind.

Nach einer möglichen Ausführung umfasst die Tragkonstruktion im Wesentlichen parallel zur Höhenerstreckung (y-Richtung) des äußeren Lagerregals ausgerichtete Tragprofile und/oder bilden die Tragprofile jeweils zumindest eine Reihe von Durchgangslöchern aus, wobei die zumindest eine Reihe in Richtung der Längserstreckung des Tragprofils verläuft.

Die Durchgangslöcher sind entweder in einer Reihe über die gesamte Länge des betreffenden Tragprofils durchgehend oder in einer Reihe jeweils nur in den Montagebereichen des betreffenden Tragprofils unterbrochen angeordnet. Nach letzterer Ausführung sind in jedem Montagebereich des betreffenden Tragprofils jedoch eine Mehrzahl von Durchgangslöchern vorhanden. Die Durchgangslöcher können in einem beliebigen Rasterabstand vorgesehen werden, wie oben beschrieben.

Durch die vertikale Ausrichtung der Tragprofile und damit auch der Reihen von Durchgangslöchern ist eine besonders einfache Einstellung eines Horizontalabstands und/oder Vertikalabstands möglich.

Erfindungsgemäß sind der erste Abstandhalter und zweite Abstandhalter jeweils gegenüber der Horizontalen geneigt angeordnet.

Nach der erfindungsgemäßen Ausführung ist der erste Abstandhalter in der vom gemeinsamen Montagesockel wegweisenden Richtung gegenüber der Horizontalen nach unten geneigt und der zweite Abstandhalter in der vom gemeinsamen Montagesockel wegweisenden Richtung gegenüber der Horizontalen nach oben geneigt.

Insbesondere ist die Länge der Abstandhalter größer ist als ein maximaler Horizontalabstand. Dadurch kann alleinig durch Veränderung der Winkellage der Abstandhalter relativ zu den Montagesockeln i) der Horizontalabstand oder ii) der Horizontalabstand und Vertikalabstand eingestellt werden. Der Verstellbereich für den Horizontalabstand ist durch die Länge der Abstandhalter definiert und beträgt zwischen 150 mm und 500 mm.

Nach einer vorteilhaften Ausführung ist es vorgesehen, dass die Tragprofile derart durch die Abstandhalter am äußeren Lagerregal, insbesondere jeweils an Regalrahmenteilen der Lagerregale, befestigt sind, dass eine Unterkante der Tragprofile mit einem Vertikalabstand zur Bodenplatte angeordnet ist. Durch die Einstellvorrichtung je Abstandhalter kann auch ein Vertikalabstand zwischen einem Tragprofil und der Bodenplatte eingestellt werden. Somit haben auch (ungeplante) Niveauabweichungen oder Unebenheiten an der Bodenplatte keine negativen Auswirkungen auf die Montage der (Wand)Tragkonstruktion. Zusätzliche Anpassungsarbeiten i) an der (Wand)Tragkonstruktion oder an der Bodenplatte oder ii) das Vorsehen von Zusatzmaßnahmen sind nicht erforderlich, wie insbesondere auch oben beschrieben wird. Es ist lediglich während der Montagearbeiten darauf zu achten, wie die Gegebenheit auf der Baustelle sind.

Gemäß einer vorteilhaften Ausgestaltung des Regallagersystems ist es vorgesehen, dass das Lagerregal vordere Regalsteher, hintere Regalsteher, je Lagerebene in der x-Richtung verlaufende und mit den vorderen Regalstehern verbundene vordere Längstraversen, je Lagerebene in der x-Richtung verlaufende und mit den hinteren Regalstehern verbundene hintere Längstraversen, und einen je Lagerebene zwischen der vorderen Längstraverse und der hinteren Längstraverse angeordneten Regalboden mit den Lagerplätzen aufweist.

Das Regalbediengerät ist ein Einebenenregalbediengerät oder ein Mehrebenenregalbediengerät.

Das Lagerregal weist in Richtung der Regalgasse mit Abstand angeordnete Regalrahmenteile auf, wobei die Regalrahmenteile jeweils
- den vorderen Regalsteher,
- den hinteren Regalsteher, welcher mit einem Horizontalabstand zum vorderen Regalsteher angeordnet ist,
- erste Rahmenprofile, welche sich zwischen dem vorderen Regalsteher und hinteren Regalsteher horizontal erstrecken und jeweils mit ihrem ersten Ende mit dem vorderen Regalsteher und mit ihrem zweiten Ende mit dem hinteren Regalsteher verbunden sind, umfassen.

Der Regalrahmenteil umfasst einen vorderen Regalsteher, einen hinteren Regalsteher, erste Rahmenprofile, welche sich zwischen dem vorderen Regalsteher und hinteren Regalsteher horizontal erstrecken und jeweils mit ihrem ersten Ende mit dem vorderen Regalsteher und mit ihrem zweiten Ende mit dem hinteren Regalsteher verbunden, insbesondere über Schrauben lösbar verbunden sind. Die ersten Rahmenprofile halten den vorderen Regalsteher und hinteren Regalsteher auf Abstand. Optional können auch zweite Rahmenprofile vorgesehen werden, welche zwischen den ersten Rahmenprofilen angeordnet sind und sich zwischen dem vorderen Regalsteher und hinteren Regalsteher diagonal erstrecken sowie jeweils mit ihrem ersten Ende mit dem vorderen Regalsteher und mit ihrem zweiten Ende mit dem hinteren Regalsteher verbunden, insbesondere über Schrauben lösbar verbunden sind.

Unabhängig davon ob auch die (optionalen) zweiten Rahmenprofile vorgesehen sind, sind die vorderen Regalsteher, hinteren Regalsteher und ersten Rahmenprofile zu einem selbsttragenden Rahmenteil verbunden. Der selbsttragende Rahmenteil für ein äußeres Lagerregal wird am hinteren Regalsteher zusätzlich mit einem durch Abstandhalter befestigtes Tragprofil ausgestattet. Das Tragprofil verläuft bevorzugt parallel zum hinteren Regalsteher. Der Rahmenteil für ein inneres Lagerregal umfasst hingegen den selbsttragenden Rahmenteil, nicht jedoch das am hinteren Regalsteher durch Abstandhalter befestigte Tragprofil.

Es erweist sich von Vorteil, wenn die inneren Lagerregale an den Regalrahmenteilen durch Koppelprofile miteinander verbunden sind. Dabei hat es sich als besonders vorteilhaft erwiesen, wenn die inneren Lagerregale in der x-Richtung in voneinander getrennt vorgesehenen Koppelbereichen an den einander gegenüberliegenden Regalrahmenteilen durch Koppelprofile miteinander verbunden sind. Die Koppelprofile sind in den Koppelbereichen bevorzugt an den Regalrahmenteilen der inneren Lagerregale befestigt. Insbesondere sind die Koppelprofile an den hinteren Regalstehern der Regalrahmenteile befestigt. Dadurch wird eine zusätzliche Versteifung der Regalkonstruktion erreicht.

Eine durch Windkraft eingeleitete Auslenkung der Regalkonstruktion gegenüber einer Vertikalebene hat eine minimale Amplitude. Dabei wird die gesamte Regalkonstruktion einheitlich ausgelenkt. Dadurch können unerwünschte Bewegungen der Ladegüter an den Lagerplätzen vermieden werden. Die Ladegüter verbleiben an ihren Lagerpositionen.

Sind die Koppelprofile in einem regelmäßigen Längsraster und regelmäßigen Höhenraster angeordnet wird eine besonders verwindungssteife Regalkonstruktion geschaffen. Das Koppelprofil ist ein geschlossenes Profil und endseitig mit Anschlussplatten versehen, welche über Verbindungsmittel bevorzugt an den hinteren Regalstehern einander gegenüberliegend aufgestellter innerer Lageregale lösbar befestigt sind. Das geschlossene Profil ist als Hohlprofil mit beispielweise rechteckförmigem oder quadratischem Querschnitt gestaltet. Das Koppelprofil kann aber auch genauso gut durch ein offenes Profil gebildet und endseitig mit Anschlussplatten versehen sein. Das offene Profil ist mit beispielweise C-förmigem oder U-förmigen Querschnitt gestaltet. Die Anschlussplatten sind entweder vorgefertigte Anschlussplatten, welche durch eine stoffschlüssige Verbindung mit dem Koppelprofil verbunden werden, oder am Koppelprofil durch (Kalt)Umformung einstückig mit diesem hergestellte Anschlussplatten. Als Verbindungsmittel können insbesondere Schrauben vorgesehen sein.

Gemäß einer Ausführung sind die Montagesockel in voneinander getrennt vorgesehenen Montagebereichen an den Regalrahmenteilen der äußeren Lagerregale angeordnet. Bevorzugt sind die Montagebereiche (in y-Richtung) übereinander an den Regalrahmenteilen vorgesehen. Insbesondere sind die Montagesockel über Verbindungsmittel an den hinteren Regalstehern der Regalrahmenteile lösbar befestigt. Als Verbindungsmittel können insbesondere Schrauben vorgesehen sein. Sind die Montagesockel in einem regelmäßigen Längsraster und regelmäßigen Höhenraster angeordnet, werden äußere Kräfte, insbesondere Windkräfte (Druck- und Sogwirkungen) über die Wandelemente und die Abstandhalter in die Regalkonstruktion, insbesondere die Regalrahmenteile, und über diese in den Boden eingeleitet.

Es erweist sich von besonderen Vorteil, wenn Führungsbahnen in übereinander liegenden, horizontalen Fahrebenen jeweils paarweise an den vorderen Längstraversen der Lagerregale vorgesehen sind, und das zumindest eine Regalbediengerät in der Regalgasse, wenn eine einzige Regalgasse vorhanden ist, oder das zumindest eine Regalbediengerät je Regalgasse, wenn mehrere Regalgassen vorhanden sind, auf einer Fahrebene vor den Lagerplätzen entlang der Führungsbahnen in der x-Richtung verfahrbar ist.

Nach dieser Ausführung ist das Regalbediengerät durch ein Einebenenregalbediengerät gebildet. Dabei ist es möglich, dass in einer Regalgasse mehr als ein Einebenenregalbediengerät vorgesehen ist, wobei die Einebenenregalbediengeräte unabhängig voneinander auf den verschiedenen Fahrebenen betrieben werden. Üblicherweise wird in jeder Fahrebene ein Einebenenregalbediengerät vorgesehen, wenngleich dies nicht zwingenderweise notwendig ist, sofern eine Hebevorrichtung vorgesehen wird, welche die Einebenenregalbediengeräte zwischen den Fahrebenen umsetzen kann. Derartige Regallagersysteme mit Einebenenregalbediengeräten sind beispielweise aus der WO 2016/033628 A1 und WO 2016/168878 A1 bekannt. Gemäß einer vorteilhaften Ausführung ist es vorgesehen, dass Gehstege in der Regalgasse in übereinander liegenden Wartungsebenen angeordnet und mit in der x-Richtung verlaufenden Montagetraversen an den Lagerregalen befestigt sind.

Besonders vorteilhaft erweist es sich, wenn die Gehstege in der Regalgasse in übereinander liegenden Wartungsebenen angeordnet und mit in der x-Richtung verlaufenden Montagetraversen an den Regalrahmenteilen, insbesondere den vorderen Regalstehern, befestigt sind.

Die Gehstege ermöglichen nicht nur den Zugang in die Regalgasse auf unterschiedlichen Wartungsebenen, sondern dienen auch der Versteifung der Regalkonstruktion.

In einer möglichen Ausführung sind je Wartungsebene paarweise angeordnete Montagetraversen vorgesehen, welche über Verbindungsmittel bevorzugt an den vorderen Regalstehern der Lageregale lösbar befestigt sind. Die Gehstege umfassen Gitterroste, welche über Verbindungsmittel bevorzugt an den Montagetraversen lösbar befestigt sind. Als Verbindungsmittel können insbesondere Schrauben vorgesehen sein.

Es erweist sich dabei auch von Vorteil, wenn die Koppelprofile im Wesentlichen auf dem Höhenniveau der Wartungsebenen angeordnet sind. Dadurch können äußere Kräfte, insbesondere Windkräfte (Druck- und Sogwirkungen) in der Regalkonstruktion optimal verteilt werden.

Bilden die vorderen Längstraversen gleichzeitig Führungsbahnen in übereinander liegenden, horizontalen Fahrebenen, entlang welcher Einebenenregalbediengeräte bewegt werden, wie oben beschrieben, haben selbst hohe Windlasten keine nachteiligen Auswirkungen auf die Parallelität der Führungsbahnen und damit auf die Führungsgenauigkeit für die Einebenenregalbediengeräte. Somit ist ein zuverlässiger Betrieb des Regallagersystems gewährleistet.

Besonders vorteilhaft erweist es sich, wenn die Montagesockel im Wesentlichen auf dem Höhenniveau der Wartungsebenen angeordnet sind. Dadurch können äußere Kräfte, insbesondere Windkräfte (Druck- und Sogwirkungen) in der Regalkonstruktion optimal verteilt werden.

Insgesamt wirken sich die oben genannten Maßnahmen günstig auf Bauhöhe der Lagerregale aus. So lassen sich Regalhöhen von 30 Meter und mehr problemlos umsetzen. Damit kann bei minimaler Grundfläche eine hohe Anzahl an Lagerplätzen bereitgestellt werden.

Gemäß einer Ausgestaltung der Erfindung, umfasst das Regallagersystem zusätzlich ein Gebäudedach, welches über eine (Dach)Tragkonstruktion an den Lagerregalen montiert ist und Dachelemente umfasst, welche (Dach)Tragkonstruktion durch Höhenausgleichsprofile an den Regalrahmenteilen befestigte Tragprofile umfasst, wobei die Dachelemente an den Tragprofilen angeordnet sind.

Die Höhenausgleichsprofile verlaufen parallel zur Längserstreckung des vorderen Regalstehers und hinteren Regalstehers und sind mit dem vorderen Regalsteher und hinteren Regalsteher insbesondere über eine Klemmverbindung und/oder Schraubverbindung, und dgl. lösbar verbunden. Durch Verwendung der Höhenausgleichsprofile können die hinteren Regalsteher und vorderen Regalsteher mit derselben Länge vorgefertigt werden. Unterschiedliche Dachneigungen oder der Höhenausgleich von Unebenheiten erfolgt durch die Höhenausgleichsprofile. Hierzu werden die Höhenausgleichsprofile in Vertikalrichtung relativ zum vorderen / hinteren Regalsteher positioniert und jeweils in der gewünschten Position fixiert, insbesondere mit einem oder mehreren Schrauben verschraubt. Die Höhenausgleichsprofile können auch derart gestaltet werden, dass i) die Höhenausgleichsprofile in einen Profilhohlraum des vorderen Regalstehers und hinteren Regalstehers eingesteckt werden können oder ii) der vordere Regalsteher und hintere Regalsteher in einen Profilhohlraum der Höhenausgleichsprofile eingesteckt werden können.

Die Höhenausgleichsprofile bilden beispielweise einen offenen Profilquerschnitt aus und sind U-förmig oder C-förmig gestaltet. Die vorderen Regalsteher und/oder hinteren Regalsteher bilden beispielweise einen offenen Profilquerschnitt aus und sind Omega-förmig gestaltet. Genauso gut können die Höhenausgleichsprofile, vorderen Regalsteher und/oder hinteren Regalsteher einen geschlossenen Profilquerschnitt ausbilden.

Die Höhenausgleichsprofile können vorgefertigte Reihen von Durchgangslöchern umfassen. Ebenso können der vordere Regalsteher und hintere Regalsteher jeweils vorgefertigte Reihen von Durchgangslöchern umfassen. Damit lässt sich auf der Baustelle ohne großem Montageaufwand eine Verbindung zwischen dem Höhenausgleichsprofil und dem vorderen Regalsteher / hinteren Regalsteher herstellen. Es sind lediglich zumindest ein Durchgangsloch jeder Reihe des Höhenausgleichsprofils und zumindest ein Durchgangsloch jeder Reihe des vorderen Regalstehers / hinteren Regalstehers achsgleich zueinander auszurichten, sodass die genannten Durchgangslöcher jeder Reihe von einem Fixiermittel, insbesondere einer Schraube, durchsetzt werden kann.

Eine Aufgabe der Erfindung ist es, einen Regalrahmenteil für ein verbessertes Regallagersystem in "Silobauweise" anzugeben. Insbesondere soll ein Lagerregal mit geringem Montageaufwand hergestellt werden können.

Diese Aufgabe der Erfindung wird durch die Merkmale des Anspruches 15 gelöst.

Der Regalrahmenteil umfasst einen vorderen Regalsteher, einen hinteren Regalsteher, erste Rahmenprofile, welche sich zwischen dem vorderen Regalsteher und hinteren Regalsteher horizontal erstrecken und jeweils mit ihrem ersten Ende mit dem vorderen Regalsteher und mit ihrem zweiten Ende mit dem hinteren Regalsteher verbunden, insbesondere über Schrauben lösbar verbunden sind. Die ersten Rahmenprofile halten den vorderen Regalsteher und hinteren Regalsteher auf Abstand. Optional können auch zweite Rahmenprofile vorgesehen werden, welche zwischen den ersten Rahmenprofilen angeordnet sind und sich zwischen dem vorderen Regalsteher und hinteren Regalsteher diagonal erstrecken sowie jeweils mit ihrem ersten Ende mit dem vorderen Regalsteher und mit ihrem zweiten Ende mit dem hinteren Regalsteher verbunden, insbesondere über Schrauben lösbar verbunden sind.

Unabhängig davon ob auch die (optionalen) zweiten Rahmenprofile vorgesehen sind, sind die vorderen Regalsteher, hinteren Regalsteher und ersten Rahmenprofile zu einem selbsttragenden Rahmenteil verbunden. An dem selbsttragenden Rahmenteil wird am hinteren Regalsteher zusätzlich ein durch Abstandhalter befestigtes Tragprofil vorgesehen, um den Regalrahmenteil mit der (Wand)Tragkonstruktion zu bilden. Das Tragprofil verläuft bevorzugt parallel zum hinteren Regalsteher.

Die selbsttragenden Rahmenteile können im Werk vorgefertigt oder auf der Baustelle hergestellt werden.

Hingegen werden zur Verwendung des Regalrahmenteils für ein äußeres Lagerregal in einem ersten Montageschritt i) der Abstandhalter und das Tragprofil auf der Baustelle am selbsttragenden Rahmenteil montiert. Der Abstandhalter und das Tragprofil sind jedoch auf Endmaß vorgefertigt, sodass auf der Baustelle ausschließlich eine Montage, nicht aber eine Bearbeitung der Bauteile erforderlich ist.

Ist auch die oben beschriebene Einstellvorrichtung je Abstandhalter vorgesehen, kann zumindest ein Horizontalabstand zwischen dem Tragprofil und dem äußeren Lagerregal / Regalrahmenteil eingestellt werden. Der Horizontalabstand wird bei der Montage des Abstandhalters und des Tragprofils am Regalrahmenteil eingestellt, insbesondere im Wesentlichen stufenlos eingestellt.

Der Horizontalabstand wird dabei auf die Gegebenheiten auf der Baustelle angepasst. Dies kann dadurch erfolgen, dass ein Naturmaß gemessen und der Horizontalabstand durch die Einstellvorrichtung an das Naturmaß angepasst wird. Es ist demnach lediglich während der Montagearbeiten darauf zu achten, wie die Gegebenheiten auf der Baustelle sind. Eine zusätzliche Bearbeitung, insbesondere eine spanabhebende Bearbeitung kann entfallen.

Im zweiten Montageschritt ii) werden Regalrahmenteile für ein äußeres Lagerregal in einer ersten Reihe in x-Richtung mit gegenseitigem Abstand hintereinander auf der Betonplatte aufgestellt und an dieser verankert, beispielweise verschraubt. Der Abstand beträgt vorzugsweise weniger als 5 Meter, insbesondere zwischen 2,5 Meter und 3,5 Meter.

Im dritten Montageschritt iii) werden die Regalrahmenteile über die vorderen und/oder hinteren Längstraversen miteinander verbunden. Die Längstraversen verlaufen in x-Richtung und sind mit gegenseitigem Abstand übereinander an den Regalrahmenteilen befestigt, beispielweise verschraubt.

Im vierten Montageschritt iv) werden Regalrahmenteile für ein inneres Lagerregal (welches bloß den selbsttragenden Rahmenteil, nicht jedoch das am hinteren Regalsteher durch Abstandhalter befestigte Tragprofil aufweist) in einer zweiten Reihe in x-Richtung mit gegenseitigem Abstand hintereinander auf der Betonplatte aufgestellt und an dieser verankert, beispielweise verschraubt. Der Abstand beträgt vorzugsweise weniger als 5 Meter, insbesondere zwischen 2,5 Meter und 3,5 Meter.

Das äußere Lagerregal und innere Lagerregal sind in z-Richtung mit gegenseitigem Abstand aufgestellt, sodass dazwischen eine erste Regalgasse definiert wird, innerhalb welcher ein oder mehrere Regalbediengeräte angeordnet sind. Das äußere Lagerregal und innere Lagerregal sind zur ersten Regalgasse spiegelbildlich aufgestellt.

Im fünften Montageschritt v) werden die Regalrahmenteile über die vorderen und/oder hinteren Längstraversen miteinander verbunden. Die Längstraversen verlaufen in x-Richtung und sind mit gegenseitigem Abstand übereinander an den Regalrahmenteilen befestigt, beispielweise verschraubt.

Bilden die vorderen Längstraversen am äußeren Lagerregal und vorderen Längstraversen am inneren Lagerregal gleichzeitig Führungsbahnen in übereinander liegenden, horizontalen Fahrebenen, entlang welcher Einebenenregalbediengeräte bewegt werden, wie oben beschrieben, werden in einem sechsten Montageschritt vi) in übereinander liegenden Wartungsebenen in der x-Richtung verlaufenden Montagetraversen an den Regalrahmenteilen des äußeren und inneren Lagerregals befestigt, beispielweise verschraubt, und danach die Gehstege an den je Wartungsebenen paarweise gegenüber liegenden Montagetraversen befestigt, beispielweise verschraubt.

In einem Schritt vii) können die Regalböden zwischen den vorderen Längstraversen und hinteren Längstraversen angebracht werden.

Die Schritte i) bis vii) wiederholen sich, sofern eine zweite Regalgasse vorgesehen ist. Mit anderen Worten wenn zusätzlich ein inneres Lagerregal und äußeres Lagerregal erforderlich ist.

Dabei werden im zweiten Montageschritt ii) Regalrahmenteile für ein inneres Lagerregal (welches bloß den selbsttragenden Rahmenteil, nicht jedoch das am hinteren Regalsteher durch Abstandhalter befestigte Tragprofil aufweist) in einer dritten Reihe in x-Richtung mit gegenseitigem Abstand hintereinander auf der Betonplatte aufgestellt und an dieser verankert, beispielweise verschraubt.

Danach folgt Montageschritt iii).

Dabei werden im vierten Montageschritt iv) Regalrahmenteile für ein äußeres Lagerregal in einer vierten Reihe in x-Richtung mit gegenseitigem Abstand hintereinander auf der Betonplatte aufgestellt und an dieser verankert, beispielweise verschraubt.

Das äußere Lagerregal und innere Lagerregal sind mit gegenseitigem Abstand aufgestellt, sodass dazwischen eine zweite Regalgasse definiert wird, innerhalb welcher ein oder mehrere Regalbediengeräte angeordnet sind.

Danach folgen die Montageschritte v) bis vii).

Der dritte Montageschritt iii), fünfte Montageschritt v), sechste Montageschritt vi) und siebente Montageschritt vii) entspricht den oben beschriebenen Montageschritten iii), v), vi) und vii).

Es erweist sich von Vorteil, wenn das innere Lagerregal der ersten Regalgasse und innere Lagerregal der zweiten Regalgasse in z-Richtung mit gegenseitigem Abstand aufgestellt sind, wobei dieser Abstand deutlich geringer ist als jener Abstand, welcher erforderlich ist, um eine Regalgasse zu definieren.

Sind nach einer möglichen Ausführung auch Koppelprofile zwischen dem inneren Lagerregal der ersten Regalgasse und inneren Lagerregal der zweiten Regalgasse vorgesehen, so werden in einem zusätzlichen Montageschritt diese zwischen den Regalrahmenteilen der inneren Lagerregale angeordnet und mit diesen verbunden, beispielweise verschraubt.

Wie man erkennen wird, wird mit der Montage der Lagerregale auch die (Wand)Tragkonstruktion geschaffen, sodass nur noch die Wandelemente (Fassade) an den Tragprofilen montiert werden müssen.

Es kann auch vorgesehen werden, dass mit der Montage der Lagerregale die (Dach)Tragkonstruktion geschaffen wird. Die (Dach)Tragkonstruktion umfasst an den Regalrahmenteilen zusätzlich montierte Höhenausgleichsprofile und die an Höhenausgleichsprofilen befestigten Tragprofile.

Hierzu können bereits im ersten Montageschritt i) zusätzlich zur (Wand)Tragkonstruktion, wie oben beschrieben, die Höhenausgleichsprofile an den Regalrahmenteilen für das äußere Lagerregal oder äußere Lagerregal und innere Lagerregal montiert werden.

Einerseits wird ein erstes Höhenausgleichsprofil in Vertikalrichtung relativ zum vorderen Regalsteher positioniert und in der gewünschten Position mit dem vorderen Regalsteher verbunden, insbesondere über eine Klemmverbindung und/oder Schraubverbindung mit dem vorderen Regalsteher lösbar verbunden. Andererseits wird ein zweites Höhenausgleichsprofil in Vertikalrichtung relativ zum hinteren Regalsteher positioniert und in der gewünschten Position mit dem hinteren Regalsteher verbunden, insbesondere über eine Klemmverbindung und/oder Schraubverbindung mit dem hinteren Regalsteher lösbar verbunden. Die gewünschte Position des ersten Höhenausgleichsprofils und zweiten Höhenausgleichsprofils resultiert aus der geforderten Dachneigungen.

Bevorzugt werden nach den Schritten i) bis vi) in einem Montageschritt ein Tragprofil an den Höhenausgleichsprofilen, welche am Regalrahmenteil für ein äußeres Lagerregal und am Regalrahmenteil für ein inneres Lagerregal im Schritt i) befestigt wurden, über Fixiermittel, insbesondere Schrauben, befestigt. Demnach verbindet jeweils ein Tragprofil die einander gegenüberliegend angeordneten Regalrahmenteile für ein äußeres Lagerregal und inneres Lagerregal, wenn eine Regalgasse oder zwei Regalgassen vorgesehen sind, oder für ein erstes inneres Lagerregal und zweites inneres Lagerregal, wenn mehr als zwei Regalgassen vorgesehen sind. Schließlich können auch die Tragprofile an ihren einander zugewandten Enden über geschraubte Verbindungsplatten miteinander verbunden werden.

Wie man erkennen wird, kann mit der Montage der Lagerregale auch die (Dach)Tragkonstruktion geschaffen werden, sodass nur noch die Dachelemente an den Tragprofilen montiert werden müssen.

Es kann sich auch von Vorteil erweisen, wenn der Regalrahmenteil am vorderen Regalsteher und/oder hinteren Regalsteher zusätzlich ein Höhenausgleichsprofil umfasst, welches in Längsrichtung des vorderen Regalstehers und/oder hinteren Regalstehers verläuft und in einer vordefinierten Montageposition (gewünschten Position) mit einem ersten Ende am vorderen Regalsteher und/oder hinteren Regalsteher befestigt ist, und dass das Höhenausgleichsprofil am zweiten Ende einen Montagebereich ausbildet, an welchem ein Tragprofil einer (Dach)Tragkonstruktion befestigbar ist.

Die Höhenausgleichsprofile bilden beispielweise einen offenen Profilquerschnitt aus und sind U-förmig oder C-förmig gestaltet. Die vorderen Regalsteher und/oder hinteren Regalsteher bilden beispielweise einen offenen Profilquerschnitt aus und sind Omega-förmig gestaltet. Genauso gut können die Höhenausgleichsprofile, vorderen Regalsteher und/oder hinteren Regalsteher einen geschlossenen Profilquerschnitt ausbilden.

Die Höhenausgleichsprofile können auch derart gestaltet werden, dass i) die Höhenausgleichsprofile in einen Profilhohlraum des vorderen Regalstehers und hinteren Regalstehers eingesteckt werden können oder ii) der vordere Regalsteher und hintere Regalsteher in einen Profilhohlraum der Höhenausgleichsprofile eingesteckt werden können.

Nach einer bevorzugten Ausführung ist es vorgesehen, dass
- einerseits ein erstes Höhenausgleichsprofil in Längsrichtung relativ zum vorderen Regalsteher positioniert und in einer ersten vordefinierten Montageposition mit dem vorderen Regalsteher verbunden, insbesondere über eine Klemmverbindung und/oder Schraubverbindung mit dem vorderen Regalsteher lösbar verbunden wird, und
- andererseits ein zweites Höhenausgleichsprofil in Längsrichtung relativ zum hinteren Regalsteher positioniert und in einer zweiten vordefinierten Montageposition mit dem hinteren Regalsteher verbunden, insbesondere über eine Klemmverbindung und/oder Schraubverbindung mit dem hinteren Regalsteher lösbar verbunden wird.

Wird eine Klemmverbindung einerseits zwischen dem ersten Höhenausgleichsprofil und dem vorderen Regalsteher und andererseits zwischen dem zweiten Höhenausgleichsprofil und dem hinteren Regalsteher vorgesehen, so kann das jeweilige Höhenausgleichsprofil stufenlos in eine vordefinierte Montageposition relativ zum vorderen Regalsteher / hinteren Regalsteher positioniert werden.

Anstatt der Klemmverbindung kann auch eine Schraubverbindung einerseits zwischen dem ersten Höhenausgleichsprofil und dem vorderen Regalsteher und andererseits zwischen dem zweiten Höhenausgleichsprofil und dem hinteren Regalsteher vorgesehen werden.

Hierzu umfassen die Höhenausgleichsprofile vorgefertigte Reihen von Durchgangslöchern. Ebenso umfassen der vordere Regalsteher und hintere Regalsteher jeweils vorgefertigte Reihen von Durchgangslöchern.

Nach dieser Ausführung wird das Höhenausgleichsprofil in eine vordefinierte Montageposition relativ zum vorderen Regalsteher / hinteren Regalsteher positioniert und dabei zumindest ein Durchgangsloch jeder Reihe des Höhenausgleichsprofils und zumindest ein Durchgangsloch jeder Reihe des vorderen Regalstehers / hinteren Regalstehers achsgleich zueinander ausgerichtet, sodass die genannten Durchgangslöcher jeder Reihe von einer Schraube durchsetzt werden kann. Damit kann das jeweilige Höhenausgleichsprofil in eine vordefinierte Montageposition relativ zum vorderen Regalsteher / hinteren Regalsteher im Wesentlichen stufenlos positioniert werden.

In diesem Zusammenhang bedeutet "im Wesentlichen stufenlos", wenn das Höhenausgleichsprofil relativ zum vorderen Regalsteher / hinteren Regalsteher in Abstandsschritten von weniger als 25 mm bewegt werden kann. Mit zunehmender Verkleinerung des Rasterabstandes ist eine "feinere" Positionierung der Höhenausgleichsprofile möglich.

Die erste Montageposition des Höhenausgleichsprofils am vorderen Regalsteher und zweite erste Montageposition des Höhenausgleichsprofils am hinteren Regalsteher kann unterschiedlich sein, dann wenn eine Dachneigung gefordert ist.

Außerdem umfasst das jeweilige Höhenausgleichsprofil an einem vom vorderen Regalsteher / hinteren Regalsteher abgewandten zweiten Ende einen Montagebereich, an welchem ein Tragprofil einer (Dach)Tragkonstruktion befestigt werden kann.

Der Montagebereich kann wiederum vorgefertigte Reihen von Durchgangslöcher umfassen. Ebenso kann das Tragprofil eine oder mehrere vorgefertigte Reihen von Durchgangslöcher umfassen.

Nach dieser Ausführung wird das Tragprofil relativ zu den Höhenausgleichsprofilen positioniert und dabei zumindest ein Durchgangsloch jedes Höhenausgleichsprofils und zumindest ein Durchgangsloch des Tragprofils achsgleich zueinander ausgerichtet, sodass die Durchgangslöcher der Höhenausgleichsprofile und des Tragprofils von einer Schraube durchsetzt werden kann.

Bevorzugt verbindet jeweils ein Tragprofil die einander gegenüberliegend angeordneten Regalrahmenteile für ein äußeres Lagerregal und inneres Lagerregal, wenn eine Regalgasse oder zwei Regalgassen vorgesehen sind, oder für ein erstes inneres Lagerregal und zweites inneres Lagerregal, wenn mehr als zwei Regalgassen vorgesehen sind.

An den Tragprofilen der (Dach)Tragkonstruktion werden schließlich die Dachelemente montiert.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausführung eines Regallagersystems in Draufsicht;
- Fig. 2: das Regallagersystem nach Fig. 1 in Ansicht gemäß der Linie II;
- Fig. 3: eine Ausschnittsvergrößerung aus Fig. 2;
- Fig. 4: eine Ausschnittsvergrößerung aus Fig. 1;
- Fig. 5: eine nicht erfindungsgemäße Ausführung für eine (Wand)Tragkonstruktion an einem Regalrahmenteil für ein äußeres Lagerregal (ohne Höhenausgleichsprofile);
- Fig. 6: einen Montagebereich an einem hinteren Regalsteher mit einer Ansicht auf einen Montagesockel für eine Einstellvorrichtung, in Ansicht gemäß der Linie VI in Fig. 5;
- Fig. 7: den Regalrahmenteil und einen in strichpunktierte Linien eingetragenen Abschnitt einer vorderen Längstraverse, in Ansicht gemäß der Linie VII in Fig. 5;
- Fig. 8: eine erste Ausschnittsvergrößerung aus Fig. 7;
- Fig. 9: eine zweite Ausschnittsvergrößerung aus Fig. 7;
- Fig. 10: eine Ausschnittsvergrößerung aus dem Regallagersystem mit einem Regalrahmenteil in einer ersten Ausführung;
- Fig. 11: ein Regalrahmenteil für ein inneres Lagerregal (ohne Höhenausgleichsprofile);
- Fig. 12: eine erfindungsgemäße Ausführung für eine (Wand)Tragkonstruktion an einem Regalrahmenteil für ein äußeres Lagerregal;
- Fig. 13: einen Montagebereich an einem hinteren Regalsteher mit einer Ansicht auf einen Montagesockel für eine Einstellvorrichtung, in Ansicht gemäß der Linie XIII in Fig. 12;
- Fig. 14: eine Ausschnittsvergrößerung aus dem Regallagersystem mit einem Regalrahmenteil in einer erfindungsgemäßen Ausführung;
- Fig. 15: eine Ausschnittsvergrößerung aus Fig. 12 mit einer Draufsicht auf das Tragprofil und die Abstandhalter;
- Fig. 16: eine Ausschnittsvergrößerung aus Fig. 2 mit einer (Dach)Tragkonstruktion;
- Fig. 17: am Beispiel eines äußeren Lagerregals gezeigte und an einem Regalrahmenteil montierte Höhenausgleichsprofile für die (Dach)Tragkonstruktion.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

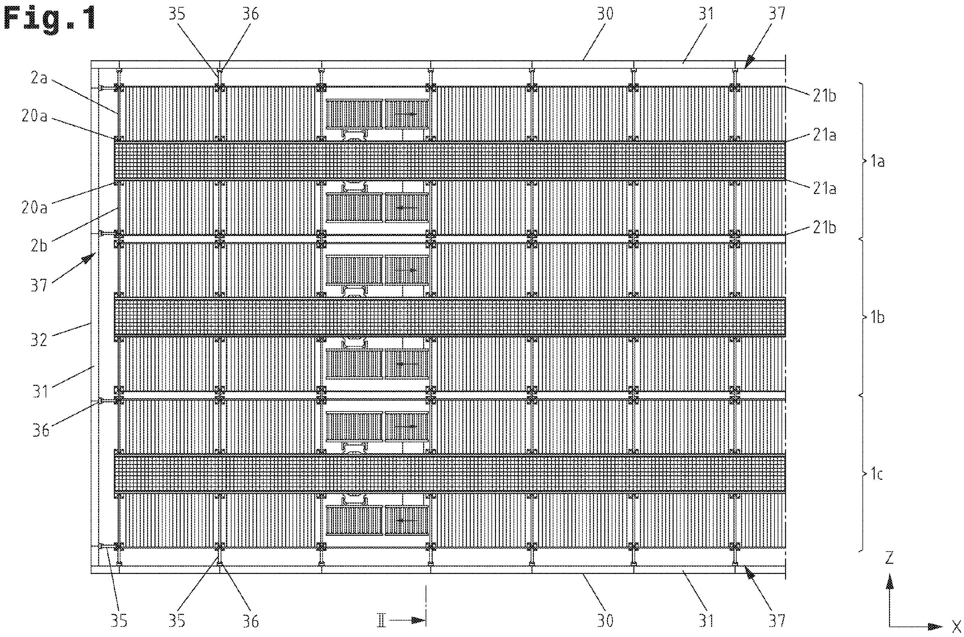

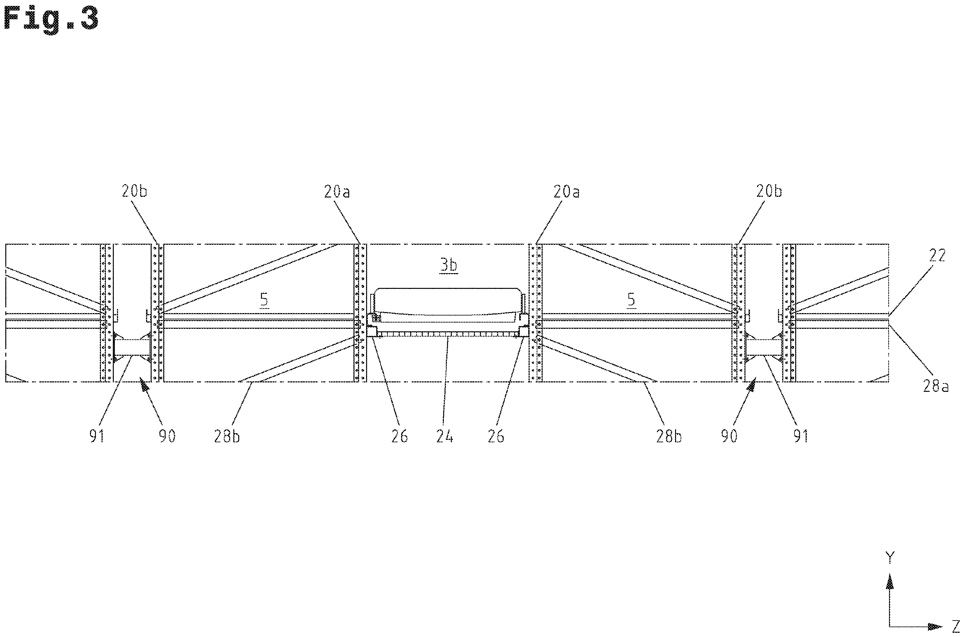

In den Fig. 1 bis 4 ist eine mögliche Ausführung eines Regallagersystems gezeigt.

Das Regallagersystem umfasst Regalgasseneinheiten 1a, 1b, 1c, nach diesem Ausführungsbeispiel drei Regalgasseneinheiten 1a, 1b, 1c. Es wäre aber auch denkbar, dass das Regallagersystem bloß eine einzige Regalgasseneinheit oder mehr als drei Regalgasseneinheiten 1a..1n umfasst. Die Anzahl der Regalgasseneinheiten variiert abhängig von der gewünschten Lagerkapazität.

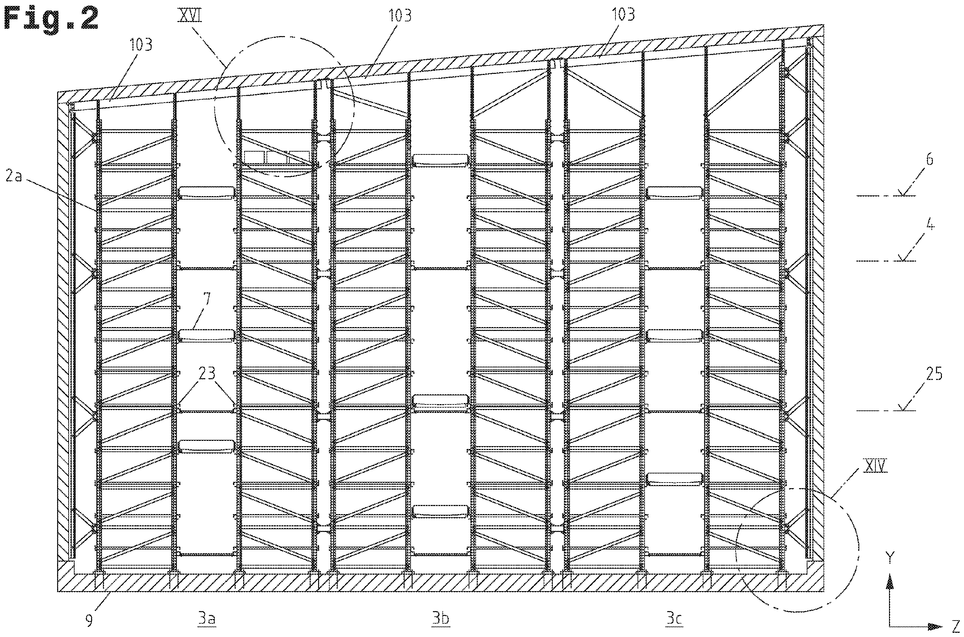

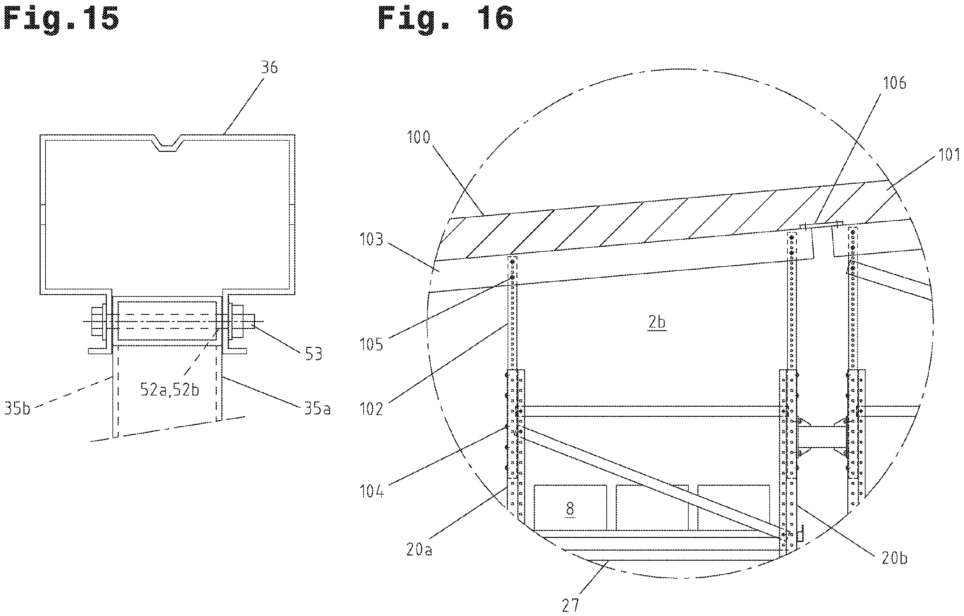

Wie ersichtlich, umfasst das Regallagersystem parallel zueinander angeordnete Lagerregale 2a, 2b und in x-Richtung zwischen den Lagerregalen 2a, 2b ein oder mehrere Regalgassen 3a, 3b, 3c. Die Lagerregale 2a sind konkret äußere Lagerregale und die Lagerregale 2b sind konkret innere Lagerregale. Die Lagerregale 2a, 2b umfassen in übereinander liegenden Lagerebenen 4 nebeneinander angeordnet Lagerplätze 5. Auf den Lagerplätzen 5 können Ladegüter 8 abgestellt werden. Aus Gründen der besseren Übersicht sind nur in Fig. 2 und 16 einige Ladegüter 8 eingetragen. Die Lagerregale 2a, 2b sind auf einer Bodenplatte 9 ortsfest aufgestellt.

Ist eine einzige Regalgasseneinheit 1a vorgesehen, wie nicht näher dargestellt, so umfasst das Regallagersystem ein erstes äußeres Lagerregal 2a, ein zweites äußeres Lagerregal 2a und eine in x-Richtung zwischen den Lagerregalen 2a verlaufende Regalgasse 3a. In der Regalgasse 3a sind in übereinander liegenden Fahrebenen 6 unabhängig voneinander ansteuerbare Regalbediengeräte 7 angeordnet.

Ist eine erste Regalgasseneinheit 1a und zweite Regalgasseneinheit 1b vorgesehen, wie nicht näher dargestellt, so umfasst das Regallagersystem ein erstes äußeres Lagerregal 2a, ein erstes inneres Lagerregal 2b, eine in x-Richtung zwischen dem ersten äußeren Lagerregal 2a und ersten inneren Lageregal 2b verlaufende erste Regalgasse 3a, ein zweites inneres Lagerregal 2b, ein zweites äußeres Lagerregal 2a und schließlich eine in x-Richtung zwischen dem zweiten inneren Lagerregal 2b und zweiten äußeren Lageregal 2b verlaufende zweite Regalgasse 3b. In der ersten Regalgasse 3a sind in übereinander liegenden Fahrebenen 6 unabhängig voneinander ansteuerbare Regalbediengeräte 7 angeordnet. In der zweiten Regalgasse 3b sind in übereinander liegenden Fahrebenen 6 unabhängig voneinander ansteuerbare Regalbediengeräte 7 angeordnet.

Nach gezeigtem Ausführungsbeispiel, ist eine erste Regalgasseneinheit 1a, zweite Regalgasseneinheit 1b und eine dritte Regalgasseneinheit 1c vorgesehen. Das Regallagersystem umfasst dann
i) ein erstes äußeres Lagerregal 2a, ein erstes inneres Lagerregal 2b und eine in x-Richtung zwischen den Lagerregalen 2a, 2b verlaufende Regalgasse 3a. In der ersten Regalgasse 3a sind in übereinander liegenden Fahrebenen 6 unabhängig voneinander ansteuerbare Regalbediengeräte 7 angeordnet - aus Gründen der besseren Übersicht sind ausschließlich in Fig. 2 und nur auf einigen der Fahrebenen 6 Regalbediengeräte 7 dargestellt,
ii) ein zweites inneres Lagerregal 2b, ein drittes inneres Lagerregal 2b und eine in x-Richtung zwischen den Lagerregalen 2b verlaufende Regalgasse 3b. In der zweiten Regalgasse 3b sind in übereinander liegenden Fahrebenen 6 unabhängig voneinander ansteuerbare Regalbediengeräte 7 angeordnet - aus Gründen der besseren Übersicht sind ausschließlich in Fig. 2 und nur auf einigen der Fahrebenen 6 Regalbediengeräte 7 dargestellt, und
iii) ein zweites äußeres Lagerregal 2b, ein viertes inneres Lagerregal 2b und eine in x-Richtung zwischen den Lagerregalen 2a, 2b verlaufende Regalgasse 3c. In der dritten Regalgasse 3c sind in übereinander liegenden Fahrebenen 6 unabhängig voneinander ansteuerbare Regalbediengeräte 7 angeordnet - aus Gründen der besseren Übersicht sind ausschließlich in Fig. 2 und nur auf einigen der Fahrebenen 6 Regalbediengeräte 7 dargestellt.

Die oben erwähnten Regalbediengeräte 7 dienen dem Transport von Ladegütern 8. Konkret können mit einem Regalbediengerät 7 Ladegüter 8 auf die Lagerplätze 5 eingelagert und Ladegüter 8 von den Lagerplätzen 5 ausgelagert werden. Hierzu umfassen die Regalbediengeräte 7 jeweils eine nicht näher dargestellte Lastaufnahmevorrichtung.

In den beschriebenen Ausführungen sind in der Regalgasse 3a, sofern das Regallagersystem eine einzige Regalgasse 3a umfasst, oder je Regalgasse 3a, 3b, 3c, sofern das Regallagersystem mehrere Regalgassen 3a umfasst, und in zumindest einigen der Fahrebenen 6 oder in jeder Fahrebene 6 Regalbediengeräte 7 vorgesehen.

Grundsätzlich ist es aber auch möglich, dass in der Regalgasse 3a, sofern das Regallagersystem eine einzige Regalgasse 3a umfasst, ausschließlich ein Regalbediengerät 7 angeordnet ist, oder je Regalgasse 3a, 3b, 3c, sofern das Regallagersystem mehrere Regalgassen 3a, 3b umfasst, ausschließlich ein Regalbediengerät 7 angeordnet ist.

Die Regalbediengeräte 7 können als so genannte Einebenenregalbediengeräte (Shuttle) ausgebildet sein, wenngleich auch Mehrebenenregalbediengeräte eingesetzt werden können.

Das Einebenenregalbediengerät ist einer Lagerebene 4 zugeordnet und bedient die Lagerplätze 5 dieser Lagerebene 4. Sind weniger Einebenenregalbediengeräte wie Fahrebenen 6 vorhanden, können nicht dargestellte Hebevorrichtungen vorgesehen werden, welche ein Einebenenregalbediengerät zwischen den Fahrebenen 6 umsetzten kann. Im Detail sind eine solche Hebevorrichtung und ein solches Einebenenregalbediengerät in unterschiedliche Ausführungen in der WO 2012/106745 A1 und WO 2016/168878 A1 beschrieben.

Hingegen ist ein Mehrebenenregalbediengerät mehr als einer Lagerebene 4 zugeordnet und bedient die Lagerplätze 5 dieser Lagerebenen 4.

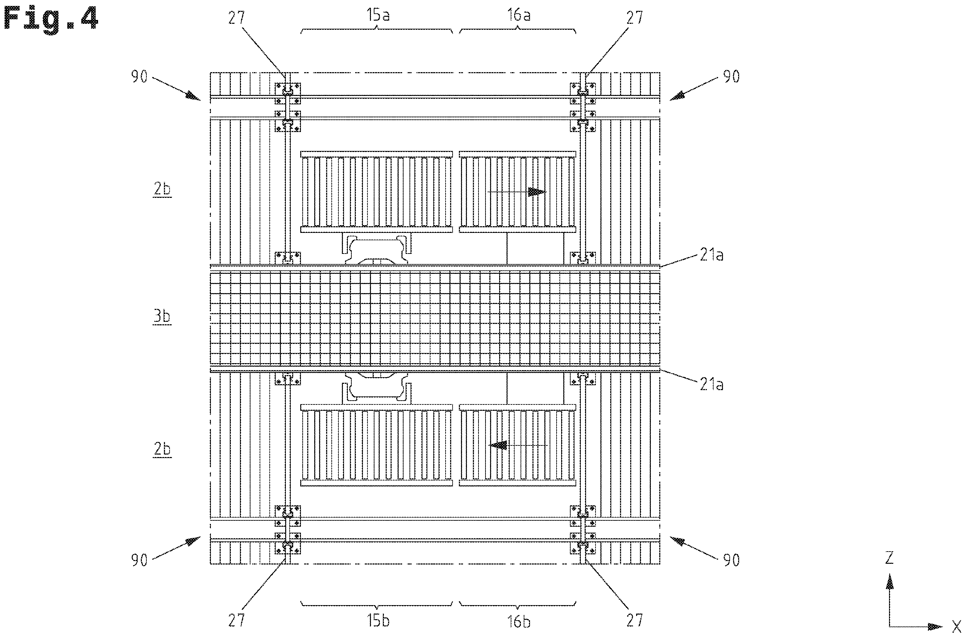

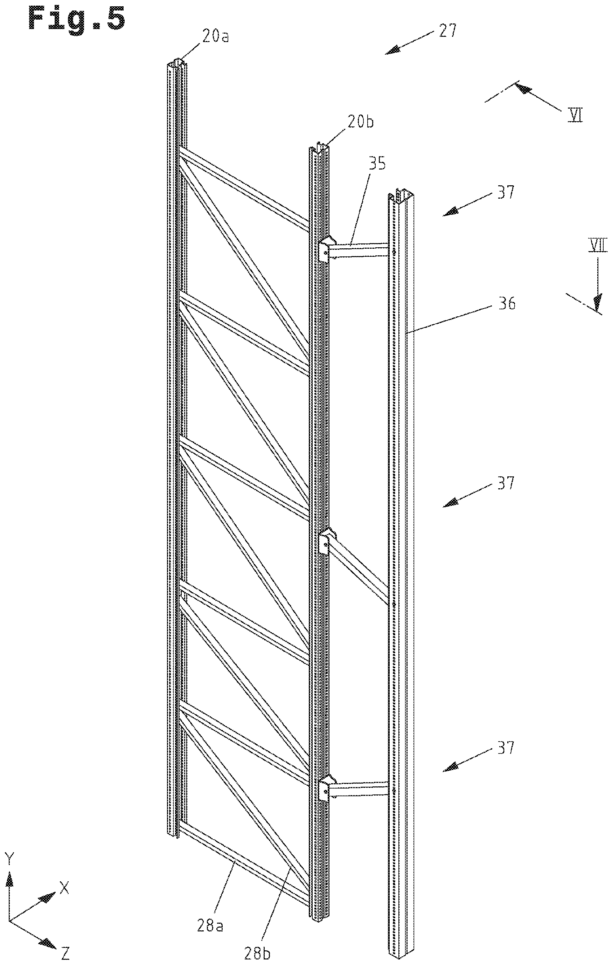

Im Detail ist ein solches Mehrebenenregalbediengerät in unterschiedliche Ausführungen in der WO 2010/118445 A1, WO 2016/141395 A1 und WO 2016/033628 A1, Fig. 4 und Fig. 5 beschrieben.

Wie in diesem Ausführungsbeispiel gezeigt, kann das Regallagersystem eine Ladegut-Manipulationseinheit, sofern das Regallagersystem eine einzige Regalgasse 3a umfasst, oder je Regalgasse 3a, 3b, 3c eine Ladegut-Manipulationseinheit, sofern das Regallagersystem mehrere Regalgassen 3a, 3b umfasst, aufweisen.

Die Ladegut-Manipulationseinheit umfasst beispielweise eine erste Ladegut-Hebevorrichtung 15a zum Einlagern von Ladegütern 8, eine zweite Ladegut-Hebevorrichtung 15b zum Auslagern von Ladegütern 8, eine erste Puffervorrichtung 16a zum Einlagern von Ladegütern 8 und eine zweite Puffervorrichtung 16b zum Auslagern von Ladegütern 8.

Die erste Ladegut-Hebevorrichtung 15a zum Einlagern von Ladegütern 8 umfasst zumindest eine heb- und senkbare Transportvorrichtung, durch welche ein Ladegut 8 von der ersten Ladegut-Hebevorrichtung 15a auf eine Bereitstellvorrichtung der ersten Puffervorrichtung 16a transportiert werden kann.

Die zweite Ladegut-Hebevorrichtung 15b zum Auslagern von Ladegütern 8 umfasst zumindest eine heb- und senkbare Transportvorrichtung, durch welche ein Ladegut 8 von einer Bereitstellvorrichtung der zweiten Puffervorrichtung 16b auf die Transportvorrichtung der zweiten Ladegut-Hebevorrichtung 15b transportiert werden kann.

Die erste Puffervorrichtung 16a zum Einlagern von Ladegütern 8 umfasst in der x-Richtung benachbart an einer der Seiten der ersten Ladegut-Hebevorrichtung 15a und in zumindest einigen der Lagerebenen 4 angeordnete Bereitstellvorrichtungen zum Einlagern von Ladegütern 8. Bevorzugt ist in jeder Lagerebenen 4 eine Bereitstellvorrichtung angeordnet.

Die zweite Puffervorrichtung 16b zum Auslagern von Ladegütern 8 umfasst in der x-Richtung benachbart an einer der Seiten der zweiten Ladegut-Hebevorrichtung 15b und in zumindest einigen der Lagerebenen 4 angeordnete Bereitstellvorrichtungen zum Auslagern von Ladegütem 8. Bevorzugt ist in jeder Lagerebenen 4 eine Bereitstellvorrichtung angeordnet.

Wie nicht näher dargestellt, ist einerseits die erste Ladegut-Hebevorrichtung 15a an eine erste Fördervorrichtung zum Einlagern von Ladegütern 8 angeschlossen, durch welche die Ladegüter 8 zu der ersten Ladegut-Hebevorrichtung 15a antransportiert werden, und andererseits die zweite Ladegut-Hebevorrichtung 15b an eine zweite Fördervorrichtung zum Auslagern von Ladegütern 8 angeschlossen, durch welche die Ladegüter 8 von der zweiten Ladegut-Hebevorrichtung 15b abtransportiert werden.

Eine solche Ladegut-Manipulationseinheit ist beispielsweise in der österreichischen Patentanmeldung A 51090/2018 beschrieben.

Eine (nicht gezeigte) alternative Ausführung besteht darin, dass die Ladegut-Manipulationseinheit eine Ladegut-Hebevorrichtung zum Einlagern und Auslagern von Ladegütern 8, eine erste Puffervorrichtung 16a zum Einlagern von Ladegütern 8 und eine zweite Puffervorrichtung 16b zum Auslagern von Ladegütern 8 umfasst. Die erste Puffervorrichtung 16a zum Einlagern von Ladegütern 8 ist in der x-Richtung benachbart an der ersten Seite der Ladegut-Hebevorrichtung und die zweite Puffervorrichtung 16b zum Auslagern von Ladegütern 8 ist in der x-Richtung benachbart an der zweiten Seite der Ladegut-Hebevorrichtung angeordnet. Die Ladegut-Hebevorrichtung ist einerseits an eine erste Fördervorrichtung zum Einlagern von Ladegütern 8 angeschlossen, durch welche die Ladegüter 8 zu der Ladegut-Hebevorrichtung antransportiert werden, und andererseits an eine zweite Fördervorrichtung zum Auslagern von Ladegütern 8 angeschlossen, durch welche die Ladegüter 8 von der Ladegut-Hebevorrichtung abtransportiert werden.

Eine solche Ladegut-Manipulationseinheit ist beispielsweise in der WO 2013/090970 A2 beschrieben.

Es zeigen die Fig. 1 bis 10, 12 den Aufbau eines Lagerregals, welches als äußeres Lagerregal 2a eingesetzt werden kann, und die Fig. Fig. 1 bis 4, 11 den Aufbau eines Lagerregals, welches als inneres Lagerregal 2b eingesetzt werden kann.

Das Lagerregal 2a, 2b umfasst vordere Regalsteher 20a, hintere Regalsteher 20b, je Lagerebene 4 in der x-Richtung verlaufende und mit den vorderen Regalstehern 20a verbundene vordere Längstraversen 21a, je Lagerebene 4 in der x-Richtung verlaufende und mit den hinteren Regalstehern 20b verbundene hintere Längstraversen 21b, und je Lagerebene 4 einen zwischen der vorderen Längstraverse 21a und der hinteren Längstraverse 21b angeordneten Regalboden 22 mit den Lagerplätzen 5. Der Regalboden 22 kann in einer Tiefenrichtung der Lagerregale 2a, 2b (z-Richtung) parallel verlaufende Querträger (wie dargestellt) beziehungsweise Tiefenauflagen umfassen oder als Fachboden oder als Gitterfachboden ausgebildet sein. Es ist auch von Vorteil, wenn Führungsbahnen 23 in übereinander liegenden, horizontalen Fahrebenen 6 und jeweils an den vorderen Längstraversen 21a der Lagerregale 2a, 2b vorgesehen sind. Das zumindest eine Regalbediengerät 7 ist in der Regalgasse 3a, wenn eine einzige Regalgasse vorhanden ist, oder das zumindest eine Regalbediengerät 7 je Regalgasse 3a, 3b, 3c, wenn mehrere Regalgassen vorhanden sind, auf einer Fahrebene 6 vor den Lagerplätzen 5 entlang der Führungsbahnen 23 in der x-Richtung verfahrbar.

Nach gezeigter Ausführung kann das Regallagersystem Gehstege 24 umfassen, welche in der Regalgasse 3a, 3b, 3c in übereinander liegenden Wartungsebenen 25 angeordnet und mit in der x-Richtung verlaufenden Montagetraversen 26 an den Lagerregalen 2a, 2b befestigt sind.

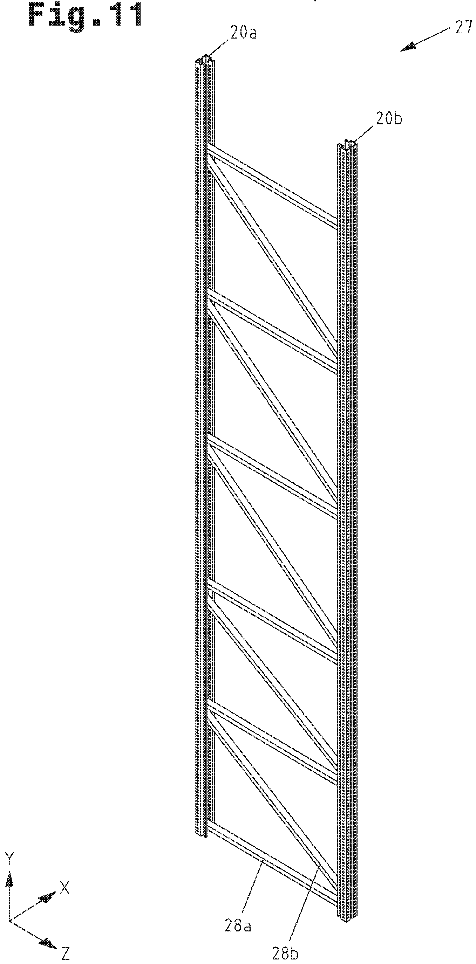

Es erweist sich von Vorteil, wenn das Lagerregal 2a, 2b in Richtung der Regalgasse 3a, 3b, 3c (x-Richtung) mit Abstand angeordnete Regalrahmenteile 27 (wie in den Fig. 5 und 11 näher dargestellt) umfasst, wobei die Regalrahmenteile 27 jeweils
- den vorderen Regalsteher 20a
- den hinteren Regalsteher 20b, welcher mit einem Horizontalabstand zum vorderen Regalsteher 20a angeordnet ist,
- erste Rahmenprofile 28a (Horizontalverband), welche sich zwischen dem vorderen Regalsteher 20a und hinteren Regalsteher 20b horizontal erstrecken und jeweils mit ihrem ersten Ende mit dem vorderen Regalsteher 20a und mit ihrem zweiten Ende mit dem hinteren Regalsteher 20b verbunden sind, aufweisen.

Die Regalrahmenteile 27 können optional jeweils
- zweite Rahmenprofile 28b (Diagonalverband), welche zwischen den ersten Rahmenprofilen 28a angeordnet sind und sich zwischen dem vorderen Regalsteher 20a und hinteren Regalsteher 20b diagonal erstrecken sowie jeweils mit ihrem ersten Ende mit dem vorderen Regalsteher 20a und mit ihrem zweiten Ende mit dem hinteren Regalsteher 20b verbunden sind, umfassen.

Unabhängig davon ob auch die (optionalen) zweiten Rahmenprofile 28b vorgesehen sind, sind der vordere Regalsteher 20a, hintere Regalsteher 20b und die ersten Rahmenprofile 28a zu einem selbsttragenden Rahmenteil verbunden.

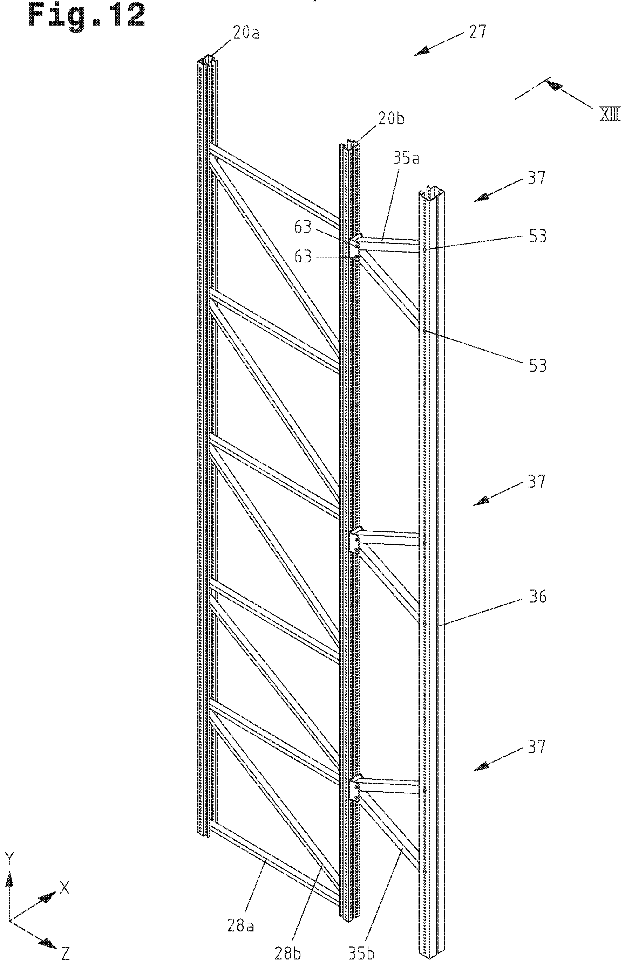

Konkret kann der Regalrahmenteil 27 der Fig. 5 oder 12 für ein äußeres Lagerregal 2a und der Regalrahmenteil 27 der Fig. 11 für ein inneres Lagerregal 2b eingesetzt werden.

Wie in den Fig. 1 und 2 ersichtlich, umfasst das Regallagersystem erste Gebäudewände 30, welche über jeweils eine (Wand)Tragkonstruktion (Unterkonstruktion) an den äußeren Lagerregalen 2a montiert sind und Wandelemente 31 aufweisen, und zweite Gebäudewände 32, welche über jeweils eine (Wand)Tragkonstruktion (Unterkonstruktion) an den äußeren Lagerregalen 2a oder an den äußeren Lagerregalen 2a und zumindest einzelnen (oder jedem) der inneren Lagerregale 2b montiert sind und Wandelemente 31 aufweisen. Die ersten Gebäudewände 30 verlaufen parallel zur Regalgasse 3a oder Regalgassen 3a, 3b, 3c, sofern mehrere Regalgassen 3a, 3b, 3c vorhanden sind. Die zweiten Gebäudewände 32 verlaufen quer (insbesondere senkrecht) zur Regalgasse 3a oder Regalgassen 3a, 3b, 3c, sofern mehrere Regalgassen 3a, 3b, 3c vorhanden sind.

Wird die erste Gebäudewand 30 über die (Wand)Tragkonstruktion am betreffenden äußeren Lagerregal 2a montiert, so erweist es sich von Vorteil, wenn die (Wand)Tragkonstruktion durch Abstandhalter 35 am äußeren Lagerregal 2a befestigte Tragprofile 36 umfasst. Konkret ist jedes Tragprofil 36 in voneinander getrennt vorgesehenen Montagebereichen 37 jeweils durch einen Abstandhalter 35 am äußeren Lagerregal 2a, insbesondere am hintere Regalsteher 20b befestigt. Die Montagebereiche 37 sind somit in einer Richtung parallel zu der / den Regalgasse(n) verlaufenden x-Richtung und in einer Richtung parallel zur Höhenrichtung des Lageregals 2a verlaufenden y-Richtung vorgesehen.

Das äußere Lagerregal 2a kann die Regalrahmenteile 27, wie oben beschrieben, und jeder Regalrahmenteil 27 zusätzlich ein Tragprofil 36 umfassen. Das Tragprofil 36 ist in den voneinander getrennt vorgesehenen Montagebereichen 37 jeweils durch zumindest einen Abstandhalter 35 am Regalrahmenteil 27, insbesondere dem hinteren Regalsteher 21b befestigt. Die Montagebereiche 37 sind also übereinander und je Regalrahmenteil 27 vorgesehen.

Die Tragprofile 36 sind also in Richtung der Regalgasse 3a, 3b, 3c (x-Richtung) mit Abstand angeordnet. Das Tragprofil 36 verläuft bevorzugt parallel zum hinteren Regalsteher 21b.

Wird die zweite Gebäudewand 32 über die (Wand)Tragkonstruktion am betreffenden äußeren Lagerregal 2a (wenn eine Regalgasse 3a vorhanden ist) oder äußeren Lagerregal 2a und inneren Lagerregal 2b (wenn zumindest eine erste Regalgasse 3a und eine zweite Regalgasse 3b vorhanden sind) montiert, so erweist es sich von Vorteil, wenn die (Wand)Tragkonstruktion durch Abstandhalter 35 am äußeren Lagerregal 2a oder am äußeren Lagerregal 2a und inneren Lagerregal 2b befestigte Tragprofile 36 umfasst. Konkret ist jedes Tragprofil 36 in voneinander getrennt vorgesehenen Montagebereichen 37 jeweils durch einen Abstandhalter 35 am äußeren Lagerregal 2a oder äußeren Lagerregal 2a und zumindest einem inneren Lagerregal 2b, insbesondere am jeweiligen hinteren Regalsteher 20b befestigt.

Das äußere Lagerregal 2a und innere Lagerregal 2b können die Regalrahmenteile 27, wie oben beschrieben, und einzelne (oder jeder) der Regalrahmenteile 27, welche in Richtung der Regalgasse 3a, 3b, 3c am äußersten Regalende angeordnet sind, zusätzlich ein Tragprofil 36 umfassen. Das Tragprofil 36 ist in den voneinander getrennt vorgesehenen Montagebereichen 37 jeweils durch zumindest einen Abstandhalter 35 am Regalrahmenteil 27, insbesondere dem hinteren Regalsteher 21b der äußeren Lagerregale 2a und einzelner innerer Lagerregale 2b befestigt. Das Tragprofil 36 verläuft bevorzugt parallel zum hinteren Regalsteher 21b.

Demnach sind die Tragprofile 36 senkrecht zur Längsrichtung der Regalgasse 3a, 3b, 3c (z-Richtung) mit Abstand angeordnet.

Wie in Fig. 1 ersichtlich, werden die Wandelemente 31 der ersten Gebäudewände 32 und die Wandelemente 31 der zweiten Gebäudewände 32 an den Tragprofilen 36 befestigt.

Eine nicht erfindungsgemäße Ausführung einer (Wand)Tragkonstruktion für eine erste Gebäudewand 30 und/oder zweite Gebäudewand 32 ist in den Fig. 5 bis 10 dargestellt.

Dabei ist jedes Tragprofil 36 in voneinander getrennten Montagebereichen 37 jeweils durch ein einzigen Abstandhalter 35 am äußeren Lagerregal 2a oder äußeren Lagerregal 2a und inneren Lagerregal 2b, insbesondere am hinteren Regalsteher 20b befestigt. Je Abstandhalter 35 ist zusätzlich eine Einstellvorrichtung vorgesehen ist.

Die Einstellvorrichtung umfasst zumindest eine am Tragprofil 36 vorgefertigte Reihe von Durchgangslöchern 50 und in den Montagebereichen 37 je einen am äußeren Lagerregal 2a befestigten Montagesockel 51, um die erste Gebäudewand 30 zu montieren, siehe Fig. 1.

Die Einstellvorrichtung umfasst zumindest eine am Tragprofil 36 vorgefertigte Reihe von Durchgangslöchern 50 und in den Montagebereichen 37 je einen am betreffenden äußeren Lagerregal 2a oder äußeren Lagerregal 2a und inneren Lagerregal 2b befestigten Montagesockel 51, um die zweite Gebäudewand 32 zu montieren, siehe Fig. 1.

Der Abstandhalter 35 umfasst am ersten Anschlussende ein Durchgangsloch 52. Das Fixiermittel umfasst zumindest ein erstes Fixiermittel 53.

Einerseits ist der Abstandhalter 35 mit dem ersten Anschlussende zum Tragprofil 36 gerichtet und wird mit dem Tragprofil 36 derart überlappt, dass eines der Durchgangslöcher 50 am Tragprofil 36 und das Durchgangsloch 52 am Abstandhalter 35 achsgleich übereinander liegen, und andererseits ist der Abstandhalter 35 mit seinem zweiten Anschlussende am Montagesockel 51 gelagert. Der Abstandhalter 35 kann an seinem zweiten Anschlussende mit einem Durchgangsloch 54 versehen werden.

Das genannte Durchgangsloch 50 am Tragprofil 36 und das Durchgangsloch 52 am Abstandhalter 35 sind vom ersten Fixiermittel 53, insbesondere einer Schraube, durchsetzt, wenn der Abstandhalter 35 und das Tragprofil 36 miteinander verbunden sind.

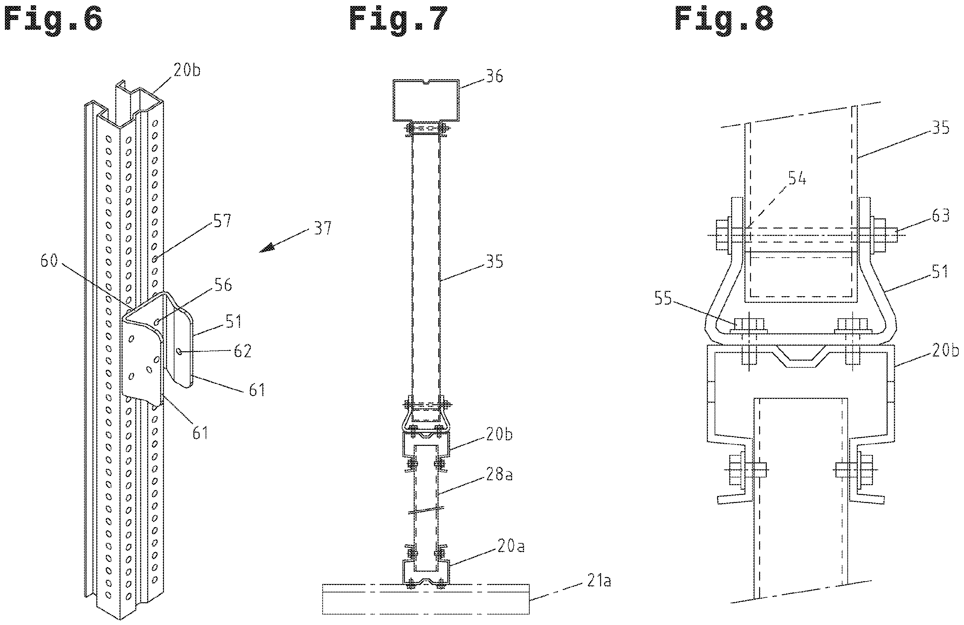

Die Montagesockel 51 werden in den Montagebereichen 37 über Fixiermittel 55, insbesondere Schrauben, am hinteren Regalsteher 20b befestigt, siehe beispielsweise Fig. 6 und 8. Nach einer bevorzugten Ausführung kann der Montagesockel 51 vorgefertigte Durchgangslöcher 56 und der hintere Regalsteher 20b vorgefertigte erste Reihen von Durchgangslöchern 57 umfassen. Der Montagesockel 51 wird mit dem hinteren Regalsteher 20b derart überlappt, dass die Durchgangslöcher 56 am Montagesockel 51 und Durchgangslöcher 57 am hinteren Regalsteher 20b achsgleich übereinander liegen und die genannten Durchgangslöcher 56, 57 von den Fixiermittels 55, insbesondere Schrauben, durchsetzt werden können, wie in Fig. 8 dargestellt.

In Fig. 6 ist der Montagesockel 51 näher dargestellt. Der Montagesockel 51 umfasst eine Basisplatte 60 und an dieser in dieselbe Richtung vorragende Schenkeln 61. Die Schenkeln 61 verjüngen sich in einem ersten Schenkelabschnitt mit zunehmenden Abstand von der Basisplatte 60 und verlaufen in einem zweiten Schenkelabschnitt parallel zueinander. Eine Öffnungsweite zwischen den Schenkeln 61 im zweiten Schenkelabschnitt entspricht im Wesentlichen einer Breite des Abstandhalters 35, sodass dieser zwischen den Schenkeln 61 aufgenommen werden kann. In der Basisplatte 60 sind die Durchgangslöcher 56 für die Fixiermittel 57. Die Schenkeln 61 sind mit Durchgangslöchern 62 versehen, welche einander gegenüberliegen und achsgleich angeordnet sind.

Das Durchgangsloch 54 am Abstandhalter 35 und die Durchgangslöcher 62 am Montagesockel 51 sind vom Fixiermittel 63, insbesondere einer Schraube, durchsetzt, wenn der Abstandhalter 35 am Montagesockel 51 gelagert bzw. montiert ist.

Der Abstandhalter 35 ist bevorzugt als geschlossenes Hohlprofil mit beispielweise rechteckförmigem oder quadratischem Querschnitt gestaltet. Der Abstandhalter 35 kann aber auch mit offenem Profilquerschnitt hergestellt werden, beispielweise C-förmig oder U-förmig Querschnitt.

Das Tragprofil 36 bildet beispielweise einen offenen Profilquerschnitt aus und ist Omega-förmig, C-förmig oder U-förmig Querschnitt gestaltet.

Nach gezeigtem Beispiel, ist das Tragprofil 36 Omega-förmig gestaltet.

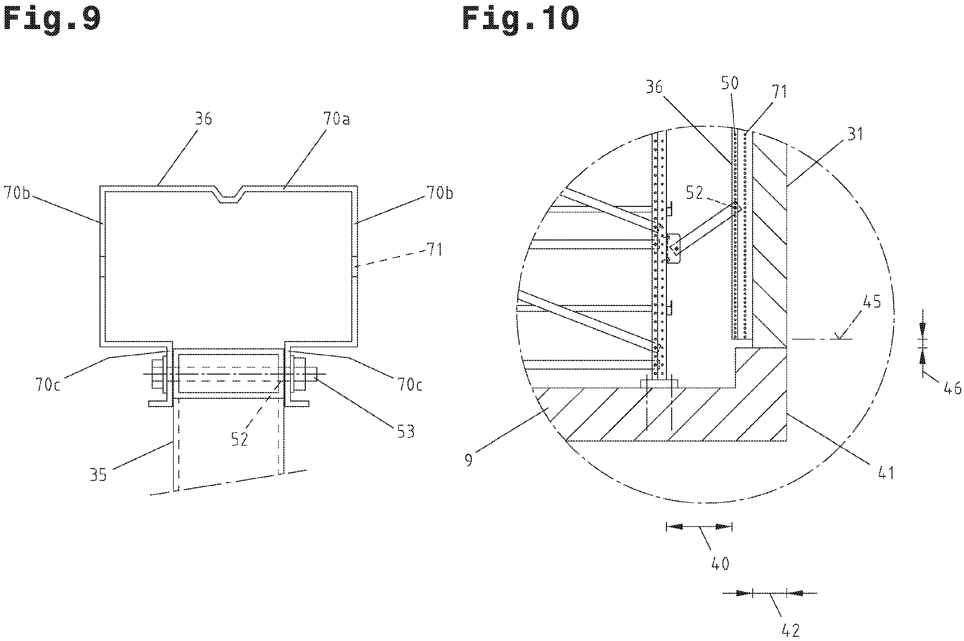

Das Tragprofil 36, wie in Fig. 9 ersichtlich, umfasst eine erste Profilwand 70a und an dieser in dieselbe Richtung vorragende zweite Profilwände 70b und an den zweiten Profilwänden 70b abgewinkelte dritte Profilwände 70c. Die erste Profilwand 70a bildet eine Montagefläche aus, an welcher die Wandelemente 31 montiert werden. Die zweiten Profilwände 70b können jeweils mit einer vorgefertigten Reihe von Durchgangslöchern 71 versehen werden, welche der Montage von Verbindungsprofilen, Montageprofilen und dgl. dienen. Die dritten Profilwände 70c sind jeweils mit einer vorgefertigten Reihe von Durchgangslöchern 50 versehen, welche der Montage der Abstandhalter 35 dienen, wie oben beschrieben. Eine Öffnungsweite zwischen den dritten Profilwänden 70c entspricht im Wesentlichen einer Breite des Abstandhalters 35, sodass dieser zwischen den dritten Profilwänden 70c aufgenommen werden kann.

In den Fig. 12 bis 15 ist eine erfindungsgemäße Ausführung einer (Wand)Tragkonstruktion für eine erste Gebäudewand 30 und/oder zweite Gebäudewand 32 dargestellt.

Dabei ist jedes Tragprofil 36 in voneinander getrennten Montagebereichen 37 jeweils durch einen ersten Abstandhalter 35a und zweiten Abstandhalter 35b am betreffenden äußeren Lagerregal 2a oder äußeren Lagerregal 2a und inneren Lagerregal 2b, insbesondere am hinteren Regalsteher 20b befestigt. Je Abstandhalter 35 ist zusätzlich eine Einstellvorrichtung vorgesehen ist.

Die Einstellvorrichtung umfasst zumindest eine am Tragprofil 36 vorgefertigte Reihe von ersten Durchgangslöchern 50a und zumindest eine am Tragprofil 36 vorgefertigte Reihe von zweiten Durchgangslöchern 50b sowie in den Montagebereichen 37 je einen am äußeren Lagerregal 2a befestigten Montagesockel 51, um die erste Gebäudewand 30 zu montieren, siehe Fig. 1.

Die Einstellvorrichtung umfasst zumindest eine am Tragprofil 36 vorgefertigte Reihe von ersten Durchgangslöchern 50a und zweiten Durchgangslöchern 50b sowie in den Montagebereichen 37 je einen am betreffenden äußeren Lagerregal 2a oder äußeren Lagerregal 2a und inneren Lagerregal 2b befestigten Montagesockel 51, um die zweite Gebäudewand 32 zu montieren, siehe Fig. 1.

Der erste Abstandhalter 35a umfasst am ersten Anschlussende ein erstes Durchgangsloch 52a und der zweite Abstandhalter 35b umfasst am ersten Anschlussende ein zweites Durchgangsloch 52b.

Der erste Abstandhalter 35a und zweite Abstandhalter 35b sind jeweils mit dem ersten Anschlussende zum Tragprofil 36 gerichtet und werden mit dem Tragprofil 36 derart überlappt, dass einerseits eines der ersten Durchgangslöcher 50a am Tragprofil 36 und das erste Durchgangsloch 52a am ersten Abstandhalter 35a achsgleich übereinander liegen und andererseits eines der zweiten Durchgangslöcher 50b am Tragprofil 36 und das zweite Durchgangsloch 52b am zweiten Abstandhalter 35b achsgleich übereinander liegen.

Der erste Abstandhalter 35a und zweite Abstandhalter 35b sind jeweils mit dem zweiten Anschlussende an einem gemeinsamen Montagesockel 51 gelagert.

Erfindungsgemäß sind der erste Abstandhalter 35a und zweite Abstandhalter 35b vom gemeinsamen Montagesockel 51 aus divergierend angeordnet.

Der erste Abstandhalter 35a und zweite Abstandhalter 35b können an ihren zweiten Anschlussenden jeweils mit einem Durchgangsloch 54a, 54b versehen werden.

Die ersten Durchgangslöcher 50a, 52a vom Tragprofil 36 und ersten Abstandhalter 35a sind von einem der ersten Fixiermittel 53, insbesondere einer Schraube, durchsetzt. Die zweiten Durchgangslöcher 50b, 52b vom Tragprofil 36 und zweiten Abstandhalter 35b sind von einem der ersten Fixiermittel 53, insbesondere einer Schraube, durchsetzt.

Der Montagesockel 51 umfasst eine Basisplatte 60 und an dieser in dieselbe Richtung vorragende Schenkeln 61, wie oben beschrieben. Der einzige Unterschied liegt darin, dass die Schenkeln 61 dem ersten Abstandhalter 35a zugeordnete Durchgangslöcher 62a ausbilden, welche einander gegenüberliegen und achsgleich angeordnet sind, und dem zweiten Abstandhalter 35b zugeordnete Durchgangslöcher 62b ausbilden, welche einander gegenüberliegen und achsgleich angeordnet sind.

Der Montagesockel 51 wird, wie oben beschrieben, über die Fixiermittel 55 am hinteren Regalsteher 20b befestigt.

Das Durchgangsloch 54a am Abstandhalter 35a und die Durchgangslöcher 62a am Montagesockel 51 sind vom Fixiermittel 63, insbesondere einer Schraube, durchsetzt, wenn der Abstandhalter 35a am Montagesockel 51 gelagert bzw. montiert ist.

Das Durchgangsloch 54b am Abstandhalter 35b und die Durchgangslöcher 62b am Montagesockel 51 sind vom Fixiermittel 63, insbesondere einer Schraube, durchsetzt, wenn der Abstandhalter 35b am Montagesockel 51 gelagert bzw. montiert ist.

Wie oben beschrieben, ist sowohl nach der nicht erfindungsgemäßen Ausführung der (Wand)Tragkonstruktion als auch nach der erfindungsgemäßen Ausführung der (Wand)Tragkonstruktion je Abstandhalter 35, 35a, 35b zusätzlich eine Einstellvorrichtung vorgesehen, durch welche ein Horizontalabstand 40 zwischen einem Tragprofil 36 und dem betreffenden äußeren Lagerregal 2a oder zwischen einem Tragprofil 36 und äußeren Lagerregal 2a / inneren Lagerregal 2b einstellbar ist, und je Abstandhalter 35, 35a, 35b zusätzlich ein Fixiermittel 53 vorgesehen ist, mittels welchem der eingestellte Horizontalabstand 40 fixierbar ist.

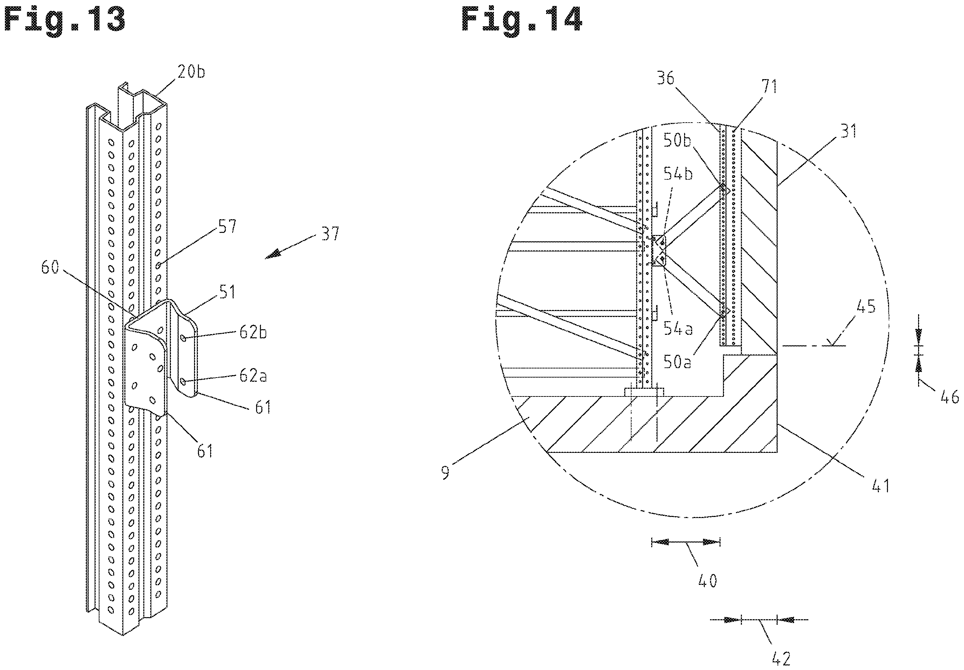

Wie in den Fig. 10 und 14 ersichtlich, kann durch die Einstellvorrichtung der Horizontalabstand 40 derart variiert werden, dass die Tragprofile 36 relativ zum Plattenrand 41 mit einem vorbestimmten Abstandsmaß 42 angeordnet sind. Wie gezeigt ist das Tragprofil 36 mit einem vorbestimmten Abstandsmaß 42 gegenüber dem Plattenrand 41 rückversetzt. Nach dem Anbringen der Wandelemente 31 verläuft eine Gebäudewand 30, 32 im Wesentlichen fluchtend zum Plattenrand 41.

Es ist aber auch möglich, dass die Tragprofile 36 mit einem vorbestimmten Abstandsmaß 42 am Plattenrand 41 vorragen (nicht dargestellt). Nach dem Anbringen der Wandelemente 31 verläuft eine Gebäudewand vor dem Plattenrand 41.

Die Bodenplatte 9 kann auch einen am Plattenrand 41 angeordneten Sockel umfassen, wie die Fig. 10 und 14 zeigen.

Es erweist sich auch von Vorteil, wenn die Tragprofile 36 der (Wand)Tragkonstruktion für die erste Gebäudewand 30 derart durch die Abstandhalter 35, 35a, 35b am äußeren Lagerregal 2a befestigt sind, dass eine Unterkante 45 der Tragprofile 36 mit einem Vertikalabstand 46 zur Bodenplatte 9 bzw. den Sockel auf der Bodenplatte 9 angeordnet ist.

Ebenso sind die Tragprofile 36 der (Wand)Tragkonstruktion für die zweite Gebäudewand 32 derart durch die Abstandhalter 35, 35a, 35b am äußeren Lagerregal 2a oder äußeren Lagerregal 2a und inneren Lagerregal 2b befestigt, dass eine Unterkante 45 der Tragprofile 36 mit einem Vertikalabstand 46 zur Bodenplatte 9 bzw. den Sockel auf der Bodenplatte 9 angeordnet ist.

Von Vorteil ist, wenn durch die Einstellvorrichtung der Vertikalabstand 46 zwischen einem Tragprofil 36 und der Bodenplatte 9 eingestellt wird. Zusätzlich ist je Abstandhalter 35, 35a, 35b das Fixiermittel 53 vorgesehen, mittels welchem der eingestellte Horizontalabstand 40 und der eingestellte Vertikalabstand 46 fixierbar sind.

Wie in den Fig. 1 bis 10 und 12 bis 17 in verschiedenen Ausführungen für die (Wand)Tragkonstruktion ersichtlich, ist die Länge der Abstandhalter 35, 35a, 35b größer ist als ein maximaler Horizontalabstand 40. Dadurch kann das Tragprofil 36 in Horizontalrichtung (z-Richtung) und Vertikalrichtung (y-Richtung) relativ zum äußeren Lageregal 2a oder äußeren Lageregal 2a und inneren Lagerregal 2b, insbesondere dem hinteren Regalsteher 20b verstellt werden. Auf diese Weise kann der Horizontalabstand 40 und/oder der Vertikalabstand 46 eingestellt werden. Das Tragprofil wird nach dem Positionieren in Horizontalrichtung (z-Richtung) und/oder Vertikalrichtung (y-Richtung) durch die Fixiermittel 53, 63 in der eingestellten Lageposition relativ zum äußeren Lageregal 2a oder äußeren Lageregal 2a und inneren Lagerregal 2b, insbesondere dem hinteren Regalsteher 20b fixiert.

Es sei an dieser Stelle auch darauf hingewiesen, dass die Montagesockel 51 in voneinander getrennt vorgesehenen Montagebereichen 37 übereinander am äußeren Lagerregal 2a oder äußeren Lagerregal 2a und inneren Lagerregal 2b,
insbesondere den hinteren Regalstehern 20b vorgesehen sind.

Die Montagesockel 51 sind in vorteilhafter Weise im Wesentlichen auf dem Höhenniveau der Wartungsebenen 25 angeordnet.

Wie bereits oben erwähnt, kann das Regallagersystem äußere Lagerregale 2a und innere Lagerregale 2b aufweisen.

In diesem Fall erweist es sich von Vorteil, wenn die inneren Lagerregale 2b in der x-Richtung in voneinander getrennt vorgesehenen Koppelbereichen 90 an den einander gegenüberliegenden Regalrahmenteilen 27, insbesondere den hinteren Regalstehern 20b, durch Koppelprofile 91 miteinander verbunden sind, wie in den Fig. 1 bis 4 und 16 gezeigt.

Die Koppelprofile 91 sind in vorteilhafter Weise im Wesentlichen auf dem Höhenniveau der Wartungsebenen 25 angeordnet.

Wie in den Fig. 2, 16 und 17 gezeigt, umfasst das Regallagersystem zusätzlich ein Gebäudedach 100, welches über eine (Dach)Tragkonstruktion an den Lagerregalen 2a, 2b montiert ist und Dachelemente 101 aufweist. Die (Dach)Tragkonstruktion umfasst durch Höhenausgleichsprofile 102 an den Regalrahmenteilen 27 befestigte Tragprofile 103, wobei die Dachelemente 101 an den Tragprofilen 103 angeordnet sind.

Konkret sind am vorderen Regalsteher 20a und hinteren Regalsteher 20b die Höhenausgleichsprofile 102 angeordnet. Möglich ist auch, dass entweder nur am vorderen Regalsteher 20a oder hinteren Regalsteher 20b ein Höhenausgleichsprofil 102 angeordnet ist. Das Höhenausgleichsprofil 102 verläuft in Längsrichtung des vorderen Regalstehers 20a und/oder hinteren Regalstehers 20b und ist in einer vordefinierten Montageposition mit einem ersten Ende über ein Fixiermittel 104 am vorderen Regalsteher 20a und/oder hinteren Regalsteher 20b befestigt. Als Fixiermittel können insbesondere Schrauben vorgesehen sein. Das Höhenausgleichsprofil 102 ist außerdem am zweiten Ende mit einem Montagebereich versehen, an welchem das Tragprofil 103 der (Dach)Tragkonstruktion befestigbar ist. Das Tragprofil 103 wird am zweiten Ende im Montagebereich über zumindest ein Fixiermittel 105 an den jeweiligen Höhenausgleichsprofilen 102 befestigt. Als Fixiermittel können insbesondere Schrauben vorgesehen sein.

Wie in Fig. 16 auch ersichtlich, können die Tragprofile 103 an ihren einander zugewandten Enden über geschraubte Verbindungsplatten 106 miteinander verbunden werden.

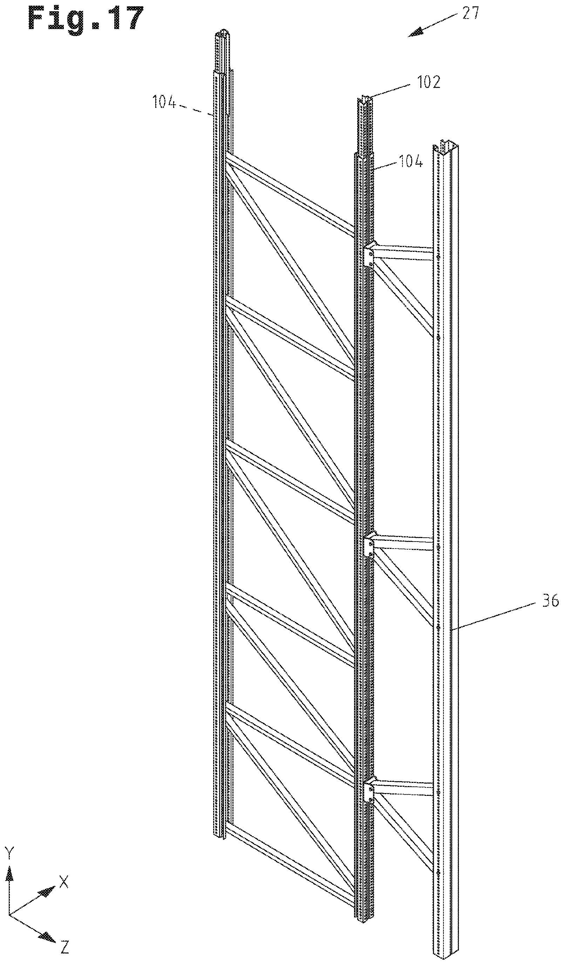

Es sei an dieser Stelle hingewiesen, dass in Fig. 17 die Höhenausgleichsprofile 102 an dem Regalrahmenteil 27 für ein äußeres Lagerregal gezeigt sind. Gleichermaßen können die Höhenausgleichsprofile 102 auch an dem Regalrahmenteil 27 für ein inneres Lagerregal eingesetzt werden, wie dies jedoch nicht dargestellt ist.

Abschließend wird auch festgehalten, dass der Schutzbereich durch die Ansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass das dargestellte Regallagersystem in der Realität auch mehr oder auch weniger Bestandteile als dargestellt umfassen können. Teilweise kann das dargestellte Regallagersystem beziehungsweise dessen Bestandteile auch unmaßstäblich und/oder vergrößert und/oder verkleinert dargestellt sein.

### Bezugszeichenaufstellung

- 1a, 1b, 1c: Regalgasseneinheit
- 2a, 2b: Lagerregal
- 3a, 3b, 3c: Regalgasse
- 4: Lagerebene
- 5: Lagerplatz

- 6: Fahrebene
- 7: Regalbediengerät
- 8: Ladegut
- 9: Bodenplatte
- 15a, 15b: Ladegut-Hebevorrichtung

- 16a, 16b: Puffervorrichtung
- 20a, 20b: Regalsteher
- 21a, 21b: Längstraverse
- 22: Regalboden
- 23: Führungsbahn

- 24: Gehsteg
- 25: Wartungsebene
- 26: Montagetraverse
- 27: Regalrahmenteil

- 28a, 28b: Rahmenprofil
- 30: Gebäudewand
- 31: Wandelement
- 32: Gebäudewand
- 35: Abstandhalter
- 36: Tragprofil
- 37: Montagebereich
- 40: Horizontalabstand
- 41: Plattenrand

- 42: Abstandsmaß
- 45: Unterkante
- 46: Vertikalabstand
- 50: Durchgangsloch Tragprofil
- 50a, 50b: Durchgangsloch Tragprofil

- 51: Montagesockel
- 52: Durchgangsloch Abstandhalter am ersten Anschlussende
- 52a, 52b: Durchgangsloch Abstandhalter am ersten Anschlussende
- 53: Fixiermittel Abstandhalter am ersten Anschlussende
- 54: Durchgangsloch Abstandhalter am zweiten Anschlussende
- 54a, 54b: Durchgangsloch Abstandhalter am zweiten Anschlussende
- 55: Fixiermittel Montagesockel
- 56: Durchgangsloch Montagesockel
- 57: Durchgangsloch hinterer Regal steher

- 60: Basisplatte
- 61: Schenkel
- 62: Durchgangsloch Montagesockel
- 62a, 62b: Durchgangsloch Montagesockel
- 63: Fixiermittel Abstandhalter am zweiten Anschlussende
- 70a: Profilwand

- 70b, 70c: Profilwand
- 71: Durchgangsloch Tragprofil
- 90: Koppelbereich
- 91: Koppelprofil
- 100: Gebäudedach

- 101: Dachelement
- 102: Höhenausgleichsprofil
- 103: Tragprofil
- 104: Fixiermittel
- 105: Fixiermittel
- 106: Verbindungsplatte

## Patentansprüche

1. Regallagersystem umfassend
- Lagerregale (2a, 2b), die zueinander parallel angeordnet sind und Lagerplätze (5) für Ladegüter (8) umfassen, letztere in übereinander liegenden Lagerebenen (4) nebeneinander angeordnet sind, welche Lagerregale entweder ausschließlich äußere Lagerregale (2a) oder äußere Lagerregale (2a) und innere Lagerregale (2b) umfassen und auf einer Bodenplatte (9) ortsfest aufgestellt sind,
- eine oder mehrere Regalgassen (3a, 3b, 3c) in einer x-Richtung zwischen den Lagerregalen (2a, 2b),
- ein oder mehrere automatisierte Regalbediengeräte (7) zum Transport von Ladegütern (8), welches Regalbediengerät (7) in der Regalgasse (3a) oder welche Regalbediengeräte (7) in den Regalgassen (3a, 3b, 3c) verfahrbar sind, und
- Gebäudewände (30, 32), welche über jeweils eine Tragkonstruktion an den äußeren Lagerregalen (2a) montiert sind und Wandelemente (31) umfassen, wobei
die Tragkonstruktion durch Abstandhalter (35, 35a, 35b) am äußeren Lagerregal (2a) befestigte Tragprofile (36) umfasst,
die Wandelemente (31) an den Tragprofilen (36) angeordnet sind und jedes Tragprofil (36) in voneinander getrennt vorgesehenen Montagebereichen (37) jeweils durch einen Abstandhalter (35, 35a, 35b) am äußeren Lagerregal (2a) befestigt ist,
je Abstandhalter (35, 35a, 35b) zusätzlich eine Einstellvorrichtung (50, 50a, 50b, 51) vorgesehen ist, durch welche ein Horizontalabstand (40) zwischen einem Tragprofil (36) und dem äußeren Lagerregal (2a) einstellbar ist, und je Abstandhalter (35, 35a, 35b) zusätzlich ein Fixiermittel (53) vorgesehen ist, mittels welchem der eingestellte Horizontalabstand (40) fixierbar ist,
die Einstellvorrichtung (50, 50a, 50b, 51) eine am Tragprofil (36) vorgefertigte Reihe von Durchgangslöchern umfasst, welche Durchgangslöcher erste Durchgangslöcher (50a) umfassen,
der Abstandhalter im jeweiligen Montagebereich (37) einen ersten Abstandhalter (35a) und einen zweiten Abstandhalter (35b) umfasst, welche jeweils an einem ersten Anschlussende ein erstes / zweites Durchgangsloch (52a, 52b) ausbilden,
der erste Abstandhalter (35a) mit dem ersten Anschlussende zum Tragprofil (36) gerichtet ist und mit dem Tragprofil (36) derart überlappt, dass eines der ersten Durchgangslöcher (50a) am Tragprofil (36) und das erste Durchgangsloch (52a) am ersten Abstandhalter (35a) achsgleich übereinander liegen,
das Fixiermittel erste Fixiermittel (53) umfasst, und
die ersten Durchgangslöcher (50a, 52a) vom Tragprofil (36) und ersten Abstandhalter (35a) von einem der ersten Fixiermittel (53), insbesondere einer Schraube, durchsetzt sind,
**dadurch gekennzeichnet, dass**
- die Einstellvorrichtung in den Montagebereichen (37) je einen am äußeren Lagerregal (2a) befestigten Montagesockel (51) umfasst,
- die Durchgangslöcher zweite Durchgangslöcher (50b) umfassen,
- der erste Abstandhalter (35a) und der zweite Abstandhalter (35b) mit einem zweiten Anschlussende am Montagesockel (51) gelagert sind, wobei der erste Abstandhalter (35a) und zweite Abstandhalter (35b) vom gemeinsamen Montagesockel (51) aus divergierend angeordnet sind,
- der zweite Abstandhalter (35b) mit dem ersten Anschlussende zum Tragprofil (36) gerichtet ist und mit dem Tragprofil (36) derart überlappt, dass eines der zweiten Durchgangslöcher (50b) am Tragprofil (36) und das zweite Durchgangsloch (52b) am zweiten Abstandhalter (35b) achsgleich übereinander liegen, und
- die zweiten Durchgangslöcher (50b, 52b) vom Tragprofil (36) und zweiten Abstandhalter (35b) von einem der ersten Fixiermittel (53), insbesondere einer Schraube, durchsetzt sind.

2. Regallagersystem nach Anspruch 1, **gekennzeichnet durch** die Einstellvorrichtung (50, 50a, 50b, 51), durch welche ein Vertikalabstand (46) zwischen einem Tragprofil (36) und der Bodenplatte (9) einstellbar ist, und **gekennzeichnet durch** das zusätzliche Fixiermittel (53) je Abstandhalter (35), durch welches der eingestellte Horizontalabstand (40) und der eingestellte Vertikalabstand (46) fixierbar sind.

3. Regallagersystem nach Anspruch 1 oder 2, **dadurch gekennzeichnet, dass** die Tragkonstruktion im Wesentlichen parallel zur Höhenerstreckung des äußeren Lagerregals (2a) ausgerichtete Tragprofile (36) umfasst und die Tragprofile (36) jeweils zumindest eine Reihe von Durchgangslöchern (50, 50a, 50b) ausbilden, wobei die zumindest eine Reihe in Richtung der Längserstreckung des Tragprofils (36) verläuft.

4. Regallagersystem nach einem der Ansprüche 1 bis 3, **dadurch gekennzeichnet, dass** die Länge der Abstandhalter (35, 35a, 35b) größer ist als ein maximaler Horizontalabstand (40).

5. Regallagersystem nach einem der Ansprüche 1 bis 4, **dadurch gekennzeichnet, dass** die Tragprofile (36) derart durch die Abstandhalter (35, 35a, 35b) am äußeren Lagerregal (2a) befestigt sind, dass eine Unterkante (45) der Tragprofile (36) mit einem Vertikalabstand (46) zur Bodenplatte (9) angeordnet ist.

6. Regallagersystem nach einem der Ansprüche 1 bis 5, **dadurch gekennzeichnet, dass** das Lagerregal (2a, 2b) vordere Regalsteher (20a), hintere Regalsteher (20b), je Lagerebene (4) in der x-Richtung verlaufende und mit den vorderen Regalstehern (20a) verbundene vordere Längstraversen (21a), je Lagerebene (4) in der x-Richtung verlaufende und mit den hinteren Regalstehern (20b) verbundene hintere Längstraversen (21b), und je Lagerebene (4) einen zwischen der vorderen Längstraverse (21a) und der hinteren Längstraverse (21b) angeordneten Regalboden (22) mit den Lagerplätzen (5) aufweist.

7. Regallagersystem nach Anspruch 6, **dadurch gekennzeichnet, dass** das Lagerregal (2a, 2b) in Richtung der Regalgasse (3a, 3b, 3c) mit gegenseitigem Abstand angeordnete Regalrahmenteile (27) umfasst, wobei die Regalrahmenteile (27) jeweils
- den vorderen Regalsteher (20a)
- den hinteren Regalsteher (20b), welcher mit einem Horizontalabstand zum vorderen Regalsteher (20a) angeordnet ist,
- erste Rahmenprofile (28a), welche sich zwischen dem vorderen Regalsteher (20a) und hinteren Regalsteher (20b) horizontal erstrecken und jeweils mit ihrem ersten Ende mit dem vorderen Regalsteher (20a) und mit ihrem zweiten Ende mit dem hinteren Regalsteher (20b) verbunden sind,
umfassen.

8. Regallagersystem nach Anspruch 7, **dadurch gekennzeichnet, dass** die inneren Lagerregale (2b) in der x-Richtung in voneinander getrennt vorgesehenen Koppelbereichen (90) an den einander gegenüberliegenden Regalrahmenteilen (27), insbesondere den hinteren Regalstehern (20b), durch Koppelprofile (91) miteinander verbunden sind.

9. Regallagersystem nach Anspruch 7 oder 8, **dadurch gekennzeichnet, dass** die Montagesockel (51) in voneinander getrennt vorgesehenen Montagebereichen (37) an den Regalrahmenteilen (27), insbesondere den hinteren Regalstehern (20b), der äußeren Lagerregale (2a), angeordnet sind.

10. Regallagersystem nach einem der Ansprüche 6 bis 9, **dadurch gekennzeichnet, dass** Führungsbahnen (23) in übereinander liegenden, horizontalen Fahrebenen (6) jeweils paarweise an den vorderen Längstraversen (21a) der Lagerregale (2a, 2b) vorgesehen sind, und das zumindest eine Regalbediengerät (7) in der Regalgasse (3a), wenn eine einzige Regalgasse (3a) vorhanden ist, oder das zumindest eine Regalbediengerät (7) je Regalgasse (3a, 3b, 3c), wenn mehrere Regalgassen (3a, 3b, 3c) vorhanden sind, auf einer Fahrebene (6) vor den Lagerplätzen (5) entlang der Führungsbahnen (23) in der x-Richtung verfahrbar ist.

11. Regallagersystem nach einem der Ansprüche 1 bis 10, **dadurch gekennzeichnet, dass** Gehstege (24) in der Regalgasse (3a, 3b, 3c) in übereinander liegenden Wartungsebenen (25) angeordnet und mit in der x-Richtung verlaufenden Montagetraversen (26) an den Lagerregalen (2a, 2b) befestigt sind.

12. Regallagersystem nach den Ansprüchen 8 und 11, **dadurch gekennzeichnet, dass** die Koppelprofile (91) im Wesentlichen auf dem Höhenniveau der Wartungsebenen (25) angeordnet sind.

13. Regallagersystem nach Anspruch 11 oder 12, **dadurch gekennzeichnet, dass** die Montagesockel (51) im Wesentlichen auf dem Höhenniveau der Wartungsebenen (25) angeordnet sind.

14. Regallagersystem nach einem der Ansprüche 1 bis 13, **dadurch gekennzeichnet, dass** dieses zusätzlich ein Gebäudedach (100) umfasst, welches über eine Tragkonstruktion an den Lagerregalen (2a, 2b) montiert ist und Dachelemente (101) umfasst, welche Tragkonstruktion durch Höhenausgleichsprofile (102) an den Regalrahmenteilen (27) befestigte Tragprofile (103) umfasst, wobei die Dachelemente (101) an den Tragprofilen (103) angeordnet sind.

15. Regalrahmenteil (27) für ein äußeres Lagerregal (2a) eines Regallagersystems, insbesondere nach einem der Ansprüche 1 bis 14, umfassend
- einen vorderen Regalsteher (20a)
- einen hinteren Regalsteher (20b), welcher mit einem Horizontalabstand zum vorderen Regalsteher (20a) angeordnet ist,
- erste Rahmenprofile (28a), welche sich zwischen dem vorderen Regalsteher (20a) und hinteren Regalsteher (20b) horizontal erstrecken und jeweils mit ihrem ersten Ende mit dem vorderen Regalsteher (20a) und mit ihrem zweiten Ende mit dem hinteren Regalsteher (20b) verbunden sind,
- gegebenenfalls zweite Rahmenprofile (28b), welche zwischen den ersten Rahmenprofilen (28a) angeordnet sind und sich zwischen dem vorderen Regalsteher (20a) und hinteren Regalsteher (20b) diagonal erstrecken sowie jeweils mit ihrem ersten Ende mit dem vorderen Regalsteher (20a) und mit ihrem zweiten Ende mit dem hinteren Regalsteher (20b) verbunden sind, und
- ein am hinteren Regalsteher (20b) durch Abstandhalter (35, 35a, 35b) befestigtes Tragprofil (36), an welchem Wandelemente (31) einer Gebäudewand (30, 32) montierbar sind, wobei
das Tragprofil (36) in voneinander getrennt vorgesehenen Montagebereichen (37) jeweils durch einen Abstandhalter (35, 35a, 35b) befestigt ist,
je Abstandhalter (35, 35a, 35b) zusätzlich eine Einstellvorrichtung (50, 50a, 50b, 51) vorgesehen ist, durch welche ein Horizontalabstand (40) zwischen einem Tragprofil (36) und dem äußeren Lagerregal (2a) einstellbar ist, und je Abstandhalter (35, 35a, 35b) zusätzlich ein Fixiermittel (53) vorgesehen ist, mittels welchem der eingestellte Horizontalabstand (40) fixierbar ist,
die Einstellvorrichtung (50, 50a, 50b, 51) eine am Tragprofil (36) vorgefertigte Reihe von Durchgangslöchern umfasst, welche Durchgangslöcher erste Durchgangslöcher (50a) umfassen,
der Abstandhalter im jeweiligen Montagebereich (37) einen ersten Abstandhalter (35a) und einen zweiten Abstandhalter (35b) umfasst, welche jeweils an einem ersten Anschlussende ein erstes / zweites Durchgangsloch (52a, 52b) ausbilden,
der erste Abstandhalter (35a) mit dem ersten Anschlussende zum Tragprofil (36) gerichtet ist und mit dem Tragprofil (36) derart überlappt, dass eines der ersten Durchgangslöcher (50a) am Tragprofil (36) und das erste Durchgangsloch (52a) am ersten Abstandhalter (35a) achsgleich übereinander liegen,
das Fixiermittel erste Fixiermittel (53) umfasst, und
die ersten Durchgangslöcher (50a, 52a) vom Tragprofil (36) und ersten Abstandhalter (35a) von einem der ersten Fixiermittel (53), insbesondere einer Schraube, durchsetzt sind,
**dadurch gekennzeichnet, dass**
- die Einstellvorrichtung in den Montagebereichen (37) je einen am äußeren Lagerregal (2a) angeordneten Montagesockel (51) umfasst, der über Fixiermittel (55) am hinteren Regalsteher (20b) befestigt ist,
- die Durchgangslöcher zweite Durchgangslöcher (50b) umfassen,
- der erste Abstandhalter (35a) und der zweite Abstandhalter (35b) mit einem zweiten Anschlussende am Montagesockel (51) gelagert sind, wobei der erste Abstandhalter (35a) und zweite Abstandhalter (35b) vom gemeinsamen Montagesockel (51) aus divergierend angeordnet sind,
- der zweite Abstandhalter (35b) mit dem ersten Anschlussende zum Tragprofil (36) gerichtet ist und mit dem Tragprofil (36) derart überlappt, dass eines der zweiten Durchgangslöcher (50b) am Tragprofil (36) und das zweite Durchgangsloch (52b) am zweiten Abstandhalter (35b) achsgleich übereinander liegen, und
- die zweiten Durchgangslöcher (50b, 52b) vom Tragprofil (36) und zweiten Abstandhalter (35b) von einem der ersten Fixiermittel (53), insbesondere einer Schraube, durchsetzt sind.

16. Regalrahmenteil nach Anspruch 15, **gekennzeichnet durch** die Einstellvorrichtung (50, 50a, 50b, 51), durch welche ein Vertikalabstand (46) zwischen dem Tragprofil (36) und einer Bodenplatte (9), auf welcher das äußere Lagerregal (2a) aufgestellt ist, einstellbar ist, und **gekennzeichnet durch** das zusätzliche Fixiermittel (53) je Abstandhalter (35, 35a,35b), durch welches der eingestellte Horizontalabstand (40) und der eingestellte Vertikalabstand (46) fixierbar sind.

17. Regalrahmenteil (27) nach Anspruch 15 oder 16 **dadurch gekennzeichnet, dass** der Regalrahmenteil (27) am vorderen Regalsteher (20a) und/oder hinteren Regalsteher (20b) zusätzlich ein Höhenausgleichsprofil (102) umfasst, welches in Längsrichtung des vorderen Regalstehers (20a) und/oder hinteren Regalstehers (20b) verläuft und in einer vordefinierten Montageposition mit einem ersten Ende am vorderen Regalsteher (20a) und/oder hinteren Regalsteher (20b) befestigt ist, und dass das Höhenausgleichsprofil (102) am zweiten Ende einen Montagebereich ausbildet, an welchem ein Tragprofil (103) einer (Dach)Tragkonstruktion befestigbar ist.

## Claims

1. A rack storage system comprising
- storage racks (2a, 2b) which are arranged parallel to one another and comprise storage locations (5) for unit loads (8), the latter being arranged next to one another on storage planes located on top of one another (4), which storage racks comprise either exclusively outer storage racks (2a) or outer storage racks (2a) and inner storage racks (2b) and are installed in a stationary manner on a bottom plate (9),
- one or multiple rack aisles (3a, 3b, 3c) between the storage racks (2a, 2b) in an x-direction,
- one or multiple automated storage and retrieval units (7) for transporting unit loads (8), which storage and retrieval unit (7) is displaceable in the rack aisle (3a) or which storage and retrieval units (7) are displaceable in the rack aisles (3a, 3b, 3c), and
- building walls (30, 32) which are mounted on the outer storage racks (2a) via respectively one support structure and comprise wall elements (31), wherein
the support structure comprises profiled support elements (36) affixed, by means of spacers (35, 35a, 35b), to the outer storage rack (2a),
the wall elements (31) are arranged on the profiled support elements (36) and each profiled support element (36) is affixed, by means of respectively one spacer (35, 35a, 35b), to the outer storage rack (2a) in mounting regions (37) provided separate from one another,
one adjustment means (50, 50a, 50b, 51) is additionally provided per spacer (35, 35a, 35b), by means of which adjustment means (50, 50a, 50b, 51) a horizontal distance (40) between a profiled support element (36) and the outer storage rack (2a) is adjustable, and one fixing means (53) is additionally provided per spacer (35, 35a, 35b), by means of which fixing means (53) the adjusted horizontal distance (40) is fixable,
the adjustment means (50, 50a, 50b, 51) comprises a row of clearance holes (50) prefabricated on the profiled support element (36), which clearance holes comprise first clearance holes (50a),
the spacer, in the respective mounting region (37), comprises a first spacer (35a) and a second spacer (35b) which respectively form a first/second clearance hole (52a, 52b) at a first connection end,
the first spacer (35a) is directed with the first connection end toward the profiled support element (36) and overlaps with the profiled support element (36) such that one of the first clearance holes (50a) on the profiled support element (36) and the first clearance hole (52a) on the first spacer (35a) are located on top of one another in axial alignment,
the fixing means comprises first fixing means (53), and
the first clearance holes (50a, 52a) of the profiled support element (36) and first spacer (35a) are interspersed with one of the first fixing means (53), in particular a screw,
**characterized in that**
- the adjustment means, in the mounting regions (37), comprises respectively one mounting base (51) affixed to the outer storage rack (2a),
- the clearance holes comprise second clearance holes (50b),
- the first spacer (35a) and the second spacer (35b) are supported, with a second connection end, on the mounting base (51), wherein the first spacer (35a) and second spacer (35b) are arranged so as to be diverging, starting from the joint mounting base (51),
- the second spacer (35b) is directed with the first connection end toward the profiled support element (36) and overlaps with the profiled support element (36) such that one of the second clearance holes (50b) on the profiled support element (36) and the second clearance hole (52b) on the second spacer (35b) are located on top of one another in axial alignment, and
- the second clearance holes (50b, 52b) of the profiled support element (36) and second spacer (35b) are interspersed with one of the first fixing means (53), in particular a screw.

2. The rack storage system according to claim 1, **characterized by** the adjustment means (50, 50a, 50b, 51), by means of which a vertical distance (46) between the profiled support element (36) and the bottom plate (9) is adjustable, and **characterized by** the additional fixing means (53) per spacer (35, 35a,35b), by means of which fixing means (53) the adjusted horizontal distance (40) and the adjusted vertical distance (46) are fixable.

3. The rack storage system according to claim 1 or 2, **characterized in that** the support structure comprises profiled support elements (36) aligned essentially parallel to the vertical extent of the outer storage rack (2a) and the profiled support elements (36) form respectively at least one row of clearance holes (50, 50a, 50b), wherein the at least one row extends in direction of the longitudinal extent of the profiled support element (36).

4. The rack storage system according to any one of the claims 1 to 3, **characterized in that** the length of the spacers (35, 35a, 35b) is greater than a maximum horizontal distance (40).

5. The rack storage system according to any one of the claims 1 to 4, **characterized in that** the profiled support elements (36) are affixed, by means of the spacers (35, 35a, 35b), to the outer storage rack (2a) such that a bottom edge (45) of the profiled support elements (36) is arranged at a vertical distance (46) to the bottom plate (9).

6. The storage rack according to any one of the claims 1 to 5, **characterized in that** the storage rack (2a, 2b) comprises front uprights (20a), rear uprights (20b), front longitudinal beams (21a) per storage plane (4) extending in the x-direction and connected with the front uprights (20a), rear longitudinal beams (21b) per storage plane (4) extending in the x-direction and connected with the rear uprights (20b), and one shelf (22), having the storage locations (5), per storage plane (4), which shelf (22) is arranged between the front longitudinal beam (21a) and the rear longitudinal beam (21b).

7. The rack storage system according to claim 6, **characterized in that** the storage rack (2a, 2b) comprises rack frame parts (27) arranged at mutual distance in direction of the rack aisle (3a, 3b, 3c), wherein the rack frame parts (27) respectively comprise
- the front upright (20a)
- the rear upright (20b), which is arranged at a horizontal distance to the front upright (20a),
- first profiled frame elements (28a), which extend horizontally between the front upright (20a) and rear upright (20b) and are connected respectively with the front upright (20a) with their first end and with the rear upright (20b) with their second end.

8. The rack storage system according to claim 7, **characterized in that** the inner storage racks (2b) are connected with one another, by means of profiled coupling elements (91), in the x-direction in coupling regions (90) provided separate from one another on the rack frame parts (27) facing one another, in particular the rear uprights (20b).

9. The rack storage system according to claim 7 or 8, **characterized in that** the mounting bases (51) are arranged on the rack frame parts (27), in particular the rear uprights (20b), of the outer storage racks (2a) in mounting regions (37) provided separate from one another.

10. The rack storage system according to any one of the claims 6 to 9, **characterized in that** guide tracks (23) are provided, respectively in pairs, on the front longitudinal beams (21a) of the storage racks (2a, 2b) on horizontal travel planes (6) located on top of one another, and the at least one storage and retrieval unit (7) is displaceable in the rack aisle (3a), if there is a single rack aisle (3a), or the at least one storage and retrieval unit (7) is displaceable per rack aisle (3a, 3b, 3c), if there are multiple rack aisles (3a, 3b, 3c), on a travel plane (6) in front of the storage locations (5) along the guide tracks (23) in the x-direction.

11. The rack storage system according to any one of the claims 1 to 10, **characterized in that** walkways (24) are arranged in the rack aisle (3a, 3b, 3c) in maintenance planes (25) located on top of one another and are affixed to the storage racks (2a, 2b) using mounting beams (26) extending in the x-direction.

12. The rack storage system according to claims 8 and 11, **characterized in that** the profiled coupling elements (91) are arranged essentially at the height level of the maintenance planes (25).

13. The rack storage system according to claim 11 or 12, **characterized in that** the mounting bases (51) are arranged essentially at the height level of the maintenance planes (25).

14. The rack storage system according to any one of the claims 1 to 13, **characterized in that** the rack storage system further comprises a building roof (100) which is mounted on the storage racks (2a, 2b) via a support structure and comprises roof elements (101), which support structure comprises profiled support elements (103) affixed, by means of height adjustment profiles (102), to the rack frame parts (27), wherein the roof elements (101) are arranged on the profiled support elements (103).

15. A rack frame part (27) for an outer storage rack (2a) of a rack storage system, in particular according to any one of the claims 1 to 14, comprising
- a front upright (20a),
- a rear upright (20b), which is arranged at a horizontal distance to the front upright (20a),
- first profiled frame elements (28a), which extend horizontally between the front upright (20a) and rear upright (20b) and are connected respectively with the front upright (20a) with their first end and with the rear upright (20b) with their second end,
- optionally second profiled frame elements (28b), which are arranged between the first profiled frame elements (28a) and extend diagonally between the front upright (20a) and rear upright (20b) and are connected respectively with the front upright (20a) with their first end and with the rear upright (20b) with their second end, and
- a profiled support element (36) affixed, by means of spacers (35, 35a, 35b), to the rear upright (20b), on which profiled support element (36) wall elements (31) of a building wall (30, 32) are mountable, wherein
the profiled support element (36) is affixed, by means of respectively one spacer (35, 35a, 35b), in mounting regions (37) provided separate from one another,
one adjustment means (50, 50a, 50b, 51) is additionally provided per spacer (35, 35a, 35b), by means of which adjustment means (50, 50a, 50b, 51) a horizontal distance (40) between a profiled support element (36) and the outer storage rack (2a) is adjustable, and one fixing means (53) is additionally provided per spacer (35, 35a, 35b), by means of which fixing means (53) the adjusted horizontal distance (40) is fixable,
the adjustment means (50, 50a, 50b, 51) comprises a row of clearance holes (50) prefabricated on the profiled support element (36), which clearance holes comprise first clearance holes (50a),
the spacer, in the respective mounting region (37), comprises a first spacer (35a) and a second spacer (35b) which respectively form a first/second clearance hole (52a, 52b) at a first connection end,
the first spacer (35a) is directed with the first connection end toward the profiled support element (36) and overlaps with the profiled support element (36) such that one of the first clearance holes (50a) on the profiled support element (36) and the first clearance hole (52a) on the first spacer (35a) are located on top of one another in axial alignment,
the fixing means comprises first fixing means (53), and
the first clearance holes (50a, 52a) of the profiled support element (36) and first spacer (35a) are interspersed with one of the first fixing means (53), in particular a screw,
**characterized in that**
- the adjustment means, in the mounting regions (37), comprises respectively one mounting base (51) affixed to the outer storage rack (2a), which mounting base (51) is affixed to the rear upright (20b) via fixing means (55),
- the clearance holes comprise second clearance holes (50b),
- the first spacer (35a) and the second spacer (35b) are supported, with a second connection end, on the mounting base (51), wherein the first spacer (35a) and second spacer (35b) are arranged so as to be diverging, starting from the joint mounting base (51),
- the second spacer (35b) is directed with the first connection end toward the profiled support element (36) and overlaps with the profiled support element (36) such that one of the second clearance holes (50b) on the profiled support element (36) and the second clearance hole (52b) on the second spacer (35b) are located on top of one another in axial alignment, and
- the second clearance holes (50b, 52b) of the profiled support element (36) and second spacer (35b) are interspersed with one of the first fixing means (53), in particular a screw.

16. The rack frame part according to claim 15, **characterized by** the adjustment means (50, 50a, 50b, 51), by means of which a vertical distance (46) between the profiled support element (36) and a bottom plate (9) on which the outer storage rack (2a) is installed, is adjustable, and **characterized by** the additional fixing means (53) per spacer (35, 35a,35b), by means of which fixing means (53) the adjusted horizontal distance (40) and the adjusted vertical distance (46) are fixable.

17. The rack frame part (27) according to claim 15 or 16, **characterized in that** the rack frame part (27), on the front upright (20a) and/or rear upright (20b), additionally comprises a height adjustment profile (102) which extends in longitudinal direction of the front upright (20a) and/or rear upright (20b) and is affixed, with a first end, to the front upright (20a) and/or rear upright (20b) in a predefined mounting position, and that the height adjustment profile (102), at the second end, forms a mounting region to which a profiled support element (103) of a (roof) support structure is affixable.

## Revendications

1. Système de stockage à rayonnages comprenant
- des rayonnages de stockage (2a, 2b) qui sont disposés parallèlement entre eux et qui comprennent des emplacements de stockage (5) pour des articles à charger (8), ces derniers étant disposés de manière juxtaposée dans les niveaux de stockage superposés (4), les rayonnages de stockage comprenant soit exclusivement des rayonnages de stockage externes (2a) soit des rayonnages de stockage externes (2a) et des rayonnages de stockage internes (2b) et sont posés de manière fixe sur une plaque de fond (9),
- une ou plusieurs allées de rayonnages (3a, 3b, 3c) dans une direction x entre les rayonnages de stockage (2a, 2b),
- un ou plusieurs appareils de commande de rayonnages automatisés (7) pour le transport d'articles à charger (8), cet appareil de commande de rayonnages (7) pouvant être déplacé dans l'allée de rayonnages (3a) ou ces appareils de commande de rayonnages (7) pouvant être déplacés dans les allée de rayonnages (3a, 3b, 3c) et
- comprennent des parois de bâtiment (30, 32) qui sont montées, par l'intermédiaire respectivement d'une ossature sur les rayonnages de stockage externes (2a) et comprennent des éléments de parois (31), dans lequel
l'ossature comprend des profilés porteurs (36) fixés par des entretoises (35, 35a, 35b) au rayonnage de stockage externe (2a),
les éléments de parois (31) sont disposés sur les profilés porteurs (36) et chaque profilé porteur (36) est fixé, dans des zones de montage (37) séparées entre elle respectivement par une entretoise (35, 35a, 35b), au rayonnage de stockage externe (2a),
au niveau de chaque entretoise (35, 35a, 35b), est prévu, en outre, un dispositif de réglage (50, 50a, 50b, 51) grâce auquel une distance horizontale (40) entre un profilé porteur (36) et le rayonnage de stockage externe (2a) peut être réglé, et, au niveau de chaque entretoise (35, 35a, 35b), est prévu en outre un moyen de fixation (53) au moyen duquel la distance horizontale (40) réglée peut être fixée,
le dispositif de réglage (50, 50a, 50b, 51) comprend une rangée, préfabriquée sur le profilé porteur (36), de trous de passage, ces trous de passage comprenant des premiers trous de passage (50a),
l'entretoise de la zone de montage (37) respective comprend une première entretoise (35a) et une deuxième entretoise (35b), qui constituent chacune, au niveau d'une première extrémité de raccordement, un premier / deuxième trou de passage (52a, 52b), la première entretoise (35a) est orientée, avec la première extrémité de raccordement, vers le profilé porteur (36) et se superpose avec le profilé porteur (36) de sorte qu'un des premiers trous de passage (50a) sur le profilé porteur (36) et le premier trou de passage (52a) sur la première entretoise (35a) se superposent de manière coaxiale,
le moyen de fixation comprend des premiers éléments de fixation (53) et
les premiers trous de passage (50a, 52a) sont traversés par le profilé porteur (36) et la première entretoise (35a) est traversée par un des premiers moyens de fixation (53), plus particulièrement une vis,
**caractérisé en ce que**
- le dispositif de réglage dans les zones de montage (37) comprend respectivement un socle de montage (51) fixé au rayonnage de stockage externe (2a),
- les trous de passage comprennent des deuxièmes trous de passage (50b),
- la première entretoise (35a) et la deuxième entretoise (35b) sont logés avec une deuxième extrémité de raccordement au niveau du socle de montage (51), dans lequel la première entretoise (35a) et la deuxième entretoise (35b) sont disposées de manière divergente à partir du socle de montage commun (51),
- la deuxième entretoise (35b) est orientée, avec la première extrémité de raccordement, vers le profilé porteur (36) et se superpose avec le profilé porteur (36) de sorte qu'un des deuxièmes trous de passage (50b) sur le profilé porteur (36) et le deuxième trou de passage (52b) sur la deuxième entretoise (35b) se superposent de manière coaxiale et
- les deuxièmes trous de passage (50b, 52b) sont traversés par le profilé porteur (36) et la deuxième entretoise (35b) est traversée par un des premiers moyens de fixation (53), plus particulièrement une vis.

2. Système de stockage à rayonnages selon la revendication 1, **caractérisé par** le dispositif de réglage (50, 50a, 50b, 51), grâce auquel une distance verticale (46) entre un profilé porteur (36) et la plaque de fond (9) peut être réglée, et **caractérisé par** le moyen de fixation (53) supplémentaire pour chaque entretoise (35), grâce auquel la distance horizontale (40) réglée et la distance verticale (46) réglée peuvent être fixées.

3. Système de stockage à rayonnages selon la revendication 1 ou 2, **caractérisé en ce que** l'ossature comprend des profilés porteurs (36) orientés globalement parallèlement à l'extension en hauteur du rayonnage de stockage externe (2a) et les profilés porteurs (36) constituent respectivement au moins une rangée de trous de passage (50, 50a, 50b), dans lequel l'au moins une rangée s'étend en direction de l'extension longitudinale du profilé porteur (36).

4. Système de stockage à rayonnages selon l'une des revendications 1 à 3, **caractérisé en ce que** la longueur des entretoises (35, 35a, 35b) est supérieure à une distance horizontale maximale (40).

5. Système de stockage à rayonnages selon l'une des revendications 1 à 4, **caractérisé en ce que** les profilés porteurs (36) sont fixés à l'aide des entretoises (35, 35a, 35b) sur le rayonnage de stockage (2a) de sorte qu'un bord inférieur (45) des profilés porteurs (36) est disposé avec une distance verticale (46) par rapport à la plaque de fond (9).

6. Système de stockage à rayonnages selon l'une des revendications 1 à 5, **caractérisé en ce que** le rayonnage de stockage (2a, 2b) comprend des montants de rayonnage avant (20a), des montants de rayonnage arrière (20b), dans chaque niveau de stockage (4), des traverses longitudinales avant (21a) s'étendant dans la direction x et reliées avec les montants de rayonnage avant (20a), dans chaque niveau de stockage (4), des traverses longitudinales arrière (21b) s'étendant dans la direction x et reliées avec les montants de rayonnage arrière (20b) et, dans chaque niveau de stockage (4), un fond de rayonnage (22), avec les emplacements de stockage (5), disposé entre la traverse longitudinale avant (21a) et la traverse longitudinale arrière (21b).

7. Système de stockage à rayonnages selon la revendication 6, **caractérisé en ce que** le rayonnage de stockage (2a, 2b) comprend des parties de cadre de rayonnage (27) disposés en direction de l'allée de rayonnage (3a, 3b, 3c) avec une distance entre elles, dans lequel les parties de cadre de rayonnage (27) comprennent respectivement
- le montant de rayonnage avant (20a)
- le montant de rayonnage arrière (20b), qui est disposé avec une distance horizontale par rapport au montant de rayonnage avant (20a),
- des premiers profilés de cadre (28a) qui s'étendent horizontalement entre le montant de rayonnage avant (20a) et le montant de rayonnage arrière (20b) et qui sont reliés respectivement, avec leur première extrémité, au montant de rayonnage avant (20a) et avec leur deuxième extrémité, au montant de rayonnage arrière (20b).

8. Système de stockage à rayonnages selon la revendication 7, **caractérisé en ce que** les rayonnages de stockage internes (2b) sont reliés entre eux dans la direction x, dans des zones de montage (90) séparées entre elles, aux parties de cadres de rayonnages (27) disposées en face les unes des autres, plus particulièrement les montants de rayonnages arrière (20b), à l'aide de profilés de couplage (91).

9. Système de stockage à rayonnages selon la revendication 7 ou 8, **caractérisé en ce que** les socles de montage (51) sont disposés dans des zones de montage (37) séparées entre elles, sur les parties de cadres de rayonnages (27), plus particulièrement les montants de rayonnages arrière (20b), des rayonnages de stockage externes (2a).

10. Système de stockage à rayonnages selon l'une des revendications 6 à 9, **caractérisé en ce que** des pistes de guidage (23) sont prévues respectivement par paires, dans des niveaux de déplacement horizontaux superposés (6), sur les traverses longitudinales avant (21a) des rayonnages de stockage (2a, 2b) et l'au moins un appareil de commande de rayonnage (7) peut être déplacé dans l'allée de rayonnages (3a) lorsqu'une seule allée de rayonnages (3a) est présente ou l'au moins un appareil de commande de rayonnage (7) pour chaque allée de rayonnage (3a, 3b, 3c) peut être déplacé, lorsque plusieurs allées de rayonnages (3a, 3b, 3c) sont présentes, sur un niveau de déplacement (6) devant les emplacements de stockage (5) le long des pistes de guidage (23) dans la direction x.

11. Système de stockage à rayonnages selon l'une des revendications 1 à 10, **caractérisé en ce que** des passerelles (24) sont disposées dans l'allée de rayonnages (3a, 3b, 3c) dans des niveaux de maintenance (25) superposés et sont fixées avec des traverses de montage (26) s'étendant dans la direction x aux rayonnages de stockage (2a, 2b).

12. Système de stockage à rayonnages selon l'une des revendications 8 et 11, **caractérisé en ce que** les profilés de couplage (91) sont disposés globalement sur le niveau de hauteur des niveaux de maintenance (25).

13. Système de stockage à rayonnages selon l'une des revendications 11 ou 12, **caractérisé en ce que** les socles de montage (51) sont disposés globalement sur le niveau de hauteur des niveaux de maintenance (25).

14. Système de stockage à rayonnages selon l'une des revendications 1 à 13, **caractérisé en ce que** celui-ci comprend en outre un toit de bâtiment (100) qui est monté par l'intermédiaire d'une ossature sur les rayonnages de stockage (2a, 2b) et qui comprend des éléments de toit (101), cette ossature comprenant des profilés porteurs (103) fixés à l'aide de profilés de compensation de hauteur (102) aux parties de cadres de rayonnages (27), dans lequel les éléments de toit (101) sont disposés sur les profilés porteurs (103).

15. Partie de cadre de rayonnage (27) pour un rayonnage de stockage externe (2a) d'un système de stockage à rayonnages, plus particulièrement selon l'une des revendications 1 à 14, comprenant
- un montant de rayonnage avant (20a),
- un montant de rayonnage arrière (20b) qui est disposé avec une distance horizontale par rapport au montant de rayonnage avant (20a),
- des premiers profilés de cadre (28a) qui s'étendent horizontalement entre le montant de rayonnage avant (20a) et le montant de rayonnage arrière (20b) et qui sont reliés respectivement, avec leur première extrémité, au montant de rayonnage avant (20a) et avec leur deuxième extrémité, au montant de rayonnage arrière (20b),
- le cas échéant, des deuxièmes profilés de cadre (28b) qui sont disposés entre les premiers profilés de cadre (28a) et qui s'étendent en diagonale entre le montant de rayonnage avant (20a) et le montant de rayonnage arrière (20b) et sont reliés respectivement, avec leur première extrémité, au montant de rayonnage avant (20a) et avec leur deuxième extrémité, au montant de rayonnage arrière (20b), et
- un profilé porteur (36) fixé au montant de rayonnage arrière (20b) à l'aide d'entretoises (35, 35a, 35b), sur lequel peuvent être montés des éléments de parois (31) d'une paroi de bâtiment (30, 32), dans lequel
le profilé porteur (36) est fixé, dans des zones de montage (37) séparées entre elles, respectivement à l'aide d'une entretoise (35, 35a, 35b),
au niveau de chaque entretoise (35, 35a, 35b), est prévu, en outre, un dispositif de réglage (50, 50a, 50b, 51) grâce auquel une distance horizontale (40) entre un profilé porteur (36) et le rayonnage de stockage externe (2a) peut être réglé, et, au niveau de chaque entretoise (35, 35a, 35b), est prévu en outre un moyen de fixation (53) au moyen duquel la distance horizontale (40) réglée peut être fixée,
le dispositif de réglage (50, 50a, 50b, 51) comprend une rangée, préfabriquée sur le profilé porteur (36), de trous de passage, ces trous de passage comprenant des premiers trous de passage (50a),
l'entretoise de la zone de montage (37) respective comprend une première entretoise (35a) et une deuxième entretoise (35b), qui constituent chacune, au niveau d'une première extrémité de raccordement, un premier / deuxième trou de passage (52a, 52b), la première entretoise (35a) est orientée, avec la première extrémité de raccordement, vers le profilé porteur (36) et se superpose avec le profilé porteur (36) de sorte qu'un des premiers trous de passage (50a) sur le profilé porteur (36) et le premier trou de passage (52a) sur la première entretoise (35a) se superposent de manière coaxiale,
le moyen de fixation comprend des premiers éléments de fixation (53) et
les premiers trous de passage (50a, 52a) sont traversés par le profilé porteur (36) et la première entretoise (35a) est traversée par un des premiers moyens de fixation (53), plus particulièrement une vis,
**caractérisé en ce que**
- le dispositif de réglage dans les zones de montage (37) comprend respectivement un socle de montage (51) disposé sur le rayonnement de stockage externe (2a), qui est fixé par l'intermédiaire de moyens de fixation (55) au montant de rayonnage arrière (20b),
- les trous de passage comprennent des deuxièmes trous de passage (50b),
- la première entretoise (35a) et la deuxième entretoise (35b) sont logés avec une deuxième extrémité de raccordement au niveau du socle de montage (51), dans lequel la première entretoise (35a) et la deuxième entretoise (35b) sont disposées de manière divergente à partir du socle de montage commun (51),
- la deuxième entretoise (35b) est orientée, avec la première extrémité de raccordement, vers le profilé porteur (36) et se superpose avec le profilé porteur (36) de sorte qu'un des deuxièmes trous de passage (50b) sur le profilé porteur (36) et le deuxième trou de passage (52b) sur la deuxième entretoise (35b) se superposent de manière coaxiale et
- les deuxièmes trous de passage (50b, 52b) sont traversés par le profilé porteur (36) et la deuxième entretoise (35b) est traversée par un des premiers moyens de fixation (53), plus particulièrement une vis.

16. Partie de cadre de rayonnage selon la revendication 15, **caractérisé par** le dispositif de réglage (50, 50a, 50b, 51), grâce auquel une distance verticale (46) entre un profilé porteur (36) et la plaque de fond (9), sur laquelle le rayonnement de stockage externe (2a) est posé, peut être réglée, et **caractérisé par** le moyen de fixation (53) supplémentaire pour chaque entretoise (35, 35a, 35b), grâce auquel la distance horizontale (40) réglée et la distance verticale (46) réglée peuvent être fixées.

17. Partie de cadre de rayonnage (27) selon la revendication 15 ou 16, **caractérisé en ce que** la partie de cadre de rayonnage (27) comprend en outre, sur le montant de rayonnage avant (20a) et/ou sur le montant de rayonnage arrière (20b), un profilé de compensation de hauteur (102) qui s'étend dans la direction longitudinale du montant de rayonnage avant (20a) et/ou du montant de rayonnage arrière (20b) et est fixé, dans une position de montage prédéfinie, avec une première extrémité, au montant de rayonnage avant (20a) et/ou au montant de rayonnage arrière (20b) et **en ce que** le profilé de compensation de hauteur (102) forme, sur la deuxième extrémité, une zone de montage sur laquelle un profilé porteur (103) d'une ossature (de toit) peut être fixé.
